(19) Europäisches Patentamt
European Patent Office
Office européen des brevets

(11) **EP 1 585 946 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
*G01F 25/00* (2006.01)     *G01F 1/68* (2006.01)
*F17D 3/18* (2006.01)

(21) Anmeldenummer: **03815347.4**

(22) Anmeldetag: **23.01.2003**

(86) Internationale Anmeldenummer:
**PCT/CH2003/000055**

(87) Internationale Veröffentlichungsnummer:
**WO 2004/065915 (05.08.2004 Gazette 2004/32)**

(54) **GASENERGIEMETER MIT ERHÖHTER GENAUIGKEIT**

INCREASED-ACCURACY GAS ENERGY METER

COMPTEUR DE GAZ A PRECISION ACCRUE

(84) Benannte Vertragsstaaten:
**AT BE BG CH CY CZ DE DK EE ES FI FR GB GR HU IE IT LI LU MC NL PT SE SI SK TR**

(43) Veröffentlichungstag der Anmeldung:
**19.10.2005 Patentblatt 2005/42**

(73) Patentinhaber: **EMS-PATENT AG**
**7013 Domat/Ems (CH)**

(72) Erfinder:
• **MATTER, Daniel**
**CH-5200 Brugg (CH)**
• **SABBATTINI, Bruno**
**CH-5430 Wettingen (CH)**

• **KLEINER, Thomas**
**CH-5442 Fislisbach (CH)**
• **PRÊTRE, Philippe**
**CH-5405 Baden-Dättwil (CH)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A- 0 468 872       EP-A- 1 164 361**
**US-B1- 6 244 097      US-B1- 6 272 919**

**Beschreibung**

**TECHNISCHES GEBIET**

Die vorliegende Erfindung bezieht sich auf das Gebiet der Messung von Gasbezug mit Durchflusssensoren und insbesondere thermischen Durchflusssensoren. Sie geht aus von einem Verfahren und einem Gaszähler zum Messen eines Gasverbrauchs gemäss Oberbegriff der unabhängigen Ansprüche.

**STAND DER TECHNIK**

In der WO 01/96819 A1 wird ein Gaszähler offenbart, der als Energiemessgerät geeicht ist. Die Eichung beruht darauf, dass Sensorsignalwerte in Abhängigkeit der Durchflussrate eines Eichgases bestimmt und in Form einer Sensoreichkurve im Gaszähler gespeichert werden. Die Sensoreichkurve beziehungsweise die Sensorsignalwerte werden mit einem Signal-Umrechnungsfaktor und einem Brennwertfaktor für das Basis-Gasgemisch multipliziert, so dass das erhaltene Produkt einen Gasverbrauch in einer Energieeinheit angibt. Mit einem weiteren Korrekturfaktor kann wenigstens näherungsweise der tatsächliche Heizwert eines bezogenen Gasgemisches in der Energieeichung berücksichtigt werden. Als tatsächlicher Heizwert kann ein gemessener, über eine bestimmte Zeitspanne gemittelter Heizwert verwendet werden. Nachteilig ist, dass eine externe Einheit zur Bestimmung des Heizwerts erforderlich ist.

In der EP 1 227 305 werden ein Verfahren und ein Gaszähler zur Bestimmung eines Gasverbrauchs aus einem korrigierten Massenfluss- oder Energiebezugssignal offenbart. Dabei wird am ruhenden Gas aus einer gemessenen Erwärmungszeit eine Diffusivität und daraus ein gasspezifischer Korrekturwert f* für den Massenfluss oder Energiebezug bestimmt.

In der EP 0 373 965 werden ein Verfahren und eine Vorrichtung zur Bestimmung eines Gas- oder Energieverbrauchs aus einem korrigierten Massenflusssignal offenbart. Bei der Signalkorrektur werden die Wärmeleitfähigkeit, spezifische Wärmekapazität und Dichte des Gases berücksichtigt. Das korrigierte Massenflusssignal und damit Gas- oder Energieverbrauchssignal ist unabhängig von der Gasart und insbesondere identisch für Luft, Argon, Helium, Kohlendioxid, Methan und Propan. Nachteilig ist, dass ein solcherart normiertes Massenflusssignal insensitiv für den Heizwert eines Gases oder Gasgemisches ist, da brennbare Gase mit unterschiedlichen Heizwerten (z. B. Methan oder Propan) gleiche Massenflusssignale und sogar gleiche Signale wie unbrennbare Gase (z. B. Helium, Argon, Kohlendioxid oder Luft) ergeben.

In dem U. S. Pat. No. 5'311'447 werden ein Verfahren und eine Vorrichtung zur verbrennungslosen Bestimmung des spezifischen Heizwerts von Erdgas offenbart. Hierzu werden mit empirischen Formeln spezifischer Heizwert, Dichte oder Anteil inerter Gase aus gemessenen Werten von Viskosität, Wärmeleitfähigkeit, Wärmekapazität, optischer Absorption usw. bestimmt. Nachteilig ist der grosse Mess- und Rechenaufwand bei der quantitativen Messung mehrerer unabhängiger gasartabhängiger Grössen und bei deren Zusammenführung mit einer Volumenflussmessung in einem Gaszähler zur Bestimmung einer konsumierten Energiemenge.

In der WO 01/18500 wird eine verbesserte Massenflussmessung mit zwei thermischen CMOS-Anemometern offenbart. Am ruhenden Gas werden bei konstanter Heizleistung eine Wärmeleitfähigkeit und bei gepulste Heizleistung eine Wärmekapazität gemessen, das Gas identifiziert und aus dessen spezifischen Heizwert zusammen mit der Massenflussmessung der totale Brennwert des Gases bestimmt. Nachteilig ist wiederum der relativ grosse Aufwand bei der Bestimmung der konsumierten Energiemenge aus separaten Werten von Massenfluss und spezifischem Heizwert. Zudem muss der spezifische Heizwert für eine hinreichend genaue Bestimmung des Energiebezugs kontinuierlich und mit grosser Genauigkeit gemessen werden.

In dem Artikel von D. Hoburg und P. Ulbig, "Gesetzliches Messwesen und Brennwertrekonstruktionssysteme", Gas · Erdgas 143 (2002) Nr. 1, werden Brennwertrekonstruktionssysteme für Gasnetze mit unterschiedlichen Einspeisebrennwerten offenbart. Durch Simulation der Erdgasströmungen im Leitungsnetz kann, unter Zuhilfenahme von Messdaten wie Temperatur und Druck, die Gasbeschaffenheit an beliebigen Stellen im Gasnetz berechnet werden. Insbesondere ist der Abgabebrennwert an der Abgabestelle zum Kunden aus den Einspeisebrennwerten, Einspeisedurchflüssen, Abgabedurchflüssen und weiteren Hilfsgrössen wie Netzdrücken dynamisch berechenbar. Übliche Gasbeschaffenheitsdaten, die an den Einspeisestellen messtechnisch erfasst werden müssen, sind Brennwert, Normdichte, $CO_2$-Gehalt und $H_2$-Gehalt. Nachteilig ist auch, dass die Geometrie und Topologie des Netzes, insbesondere Rohrrauhigkeiten, meistens ungenügend bekannt sind und die Simulationsrechnung insgesamt ungenau wird. Auch hängt das Ergebnis der Simulationsrechnung stark vom gewählten Rohrströmungsmodell und von der zur Verfügung stehenden Rechenleistung ab.

**DARSTELLUNG DER ERFINDUNG**

Aufgabe der vorliegenden Erfindung ist es, ein Verfahren und eine Vorrichtung zur Bestimmung eines Gasenergiebezugs mit einer verbesserten Genauigkeit anzugeben. Diese Aufgabe wird erfindungsgemäss durch die Merkmale der unabhängigen Ansprüche gelöst.

In einem ersten Aspekt besteht die Erfindung in einem Verfahren zum Messen eines Gasbezugs, insbesondere im privaten, öffentlichen oder industriellen Bereich, mittels eines Gaszählers, der an einem Gasbezugsort eines Gasversorgungsnetzes angeordnet ist, wobei vom Gaszähler mit Hilfe eines Durchflusssensors ein Messsignal $V_s$, $V_{ns}$, $M_s$, $E_s$ für einen Mengenverbrauch und/oder Energieverbrauch des Gases bestimmt wird, wobei ein Sensorfehlerfaktor $f_i$ (oder $f_i'$, $f_i''$, $f_i'''$) des Gaszählers zur Erfassung von Abweichungen zwischen dem vom Gaszähler gemessenen Verbrauch und dem tatsächlichen Verbrauch bekannt ist, ein für den Gasbezugsort charakteristisches Verbrauchsprofil $l_i$ (auch $l_i'$, $L_i$) für den Gasverbrauch bekannt ist, der Sensorfehlerfaktor $f_i$ und das Verbrauchsprofil $l_i$ für einen Abrechnungszeitraum als Funktion einer gemeinsamen Variablen t oder T definierbar sind und ein auf den Abrechnungszeitraum bezogener, verbrauchsgewichteter Korrekturfaktor F durch eine Mittelung des Sensorfehlerfaktors $f_i$ gewichtet mit dem Verbrauchsprofil $l_i$ bestimmt wird und mit dem Korrekturfaktor F das Messsignal $V_s$, $V_{ns}$, $M_s$, $E_s$ in einen Ausgabewert $V_n$, M, E umgerechnet wird. Die Umrechnung kann im Gaszähler oder ausserhalb, z. B. beim Gasnetzbetreiber, durchgeführt werden. Der Sensorfehlerfaktor $f_i$ berücksichtigt inhärente, typischerweise gasartabhängiger Messfehler des Gaszählers oder Durchflusssensors. Das Verbrauchsprofil $l_i$ soll das Verbrauchsverhalten des Gasenergieabonnenten möglichst realistisch abbilden. Es kann für Durchflussraten in beliebigen Einheiten, z. B. Volumenfluss, Massenfluss oder Gasenergiefluss, gegeben sein. Der Korrekturfaktor F wird üblicherweise multiplikativ oder auf eine gleichwirkende Weise mit den Messsignalen verrechnet. Das erfindungsgemässe Verfahren und Gasmeter hat den wesentlichen Vorteil, dass Schwankungen in der Gaszusammensetzung mit dem kundenspezifischen Verbrauchsverhalten gewichtet werden und erst in einer solcherart kundenspezifischen Form zur Korrektur des Messsignals $V_s$, $V_{ns}$, $M_s$, $E_s$ verwendet werden. Dadurch wird die Genauigkeit einer Gasvolumen-, Gasmassen- oder Gasenergiemessung deutlich erhöht.

In einem Ausführungsbeispiel ist das Messsignal ein vom Gaszähler gemessenes Betriebsvolumensignal $V_s$, Normvolumensignal $V_{ns}$, Gasmassensignal $M_s$ oder Energiesignal $E_s$ und/oder der Ausgabewert ist ein bezogenes Normvolumen $V_n$, eine bezogene Gasmasse M oder eine bezogene Gasenergie E.

In einem anderen Ausführungsbeispiel umfasst die Mittelung eine Summation und/oder Integration über die gemeinsame Variable von Produkten, die den Sensorfehlerfaktor und das Verbrauchsprofil enthalten, und/oder die Mittelung wird unter Berücksichtigung eines auf die gemeinsame Variable bezogenen Heizwertprofils $H_i$ (auch $H_i'$) durchgeführt. Insbesondere umfasst die Mittelung eine geeignete Normierungsfunktion.

Das Ausführungsbeispiel gemäss Anspruch 4a hat den Vorteil, dass ein Messsignal über beispielsweise ein halbes oder ganzes Jahr im Gaszähler aufsummiert, vom Gasmann abgelesen oder übermittelt und erst nachträglich bezüglich Schwankungen der Gaszusammensetzung und insbesondere des Heizwerts korrigiert werden kann. Der Korrekturfaktor F kann durch eine unabhängig durchgeführte Mittelung, insbesondere a-priori, simultan oder a-posteriori zur Messsignalerfassung, bestimmt werden. So kann bei nichtregistrierenden Gaszählern das zeitgemittelte Messsignal mit geringem Aufwand kundenspezifisch korrigiert werden, ohne dass Heizwertschwankungen und/oder Gaslastprofile lokal erfasst oder zum Gasbezugsort übermittelt werden müssen. Die nachträgliche Messsignalkorrektur kann prinzipiell auch im Gaszähler selber durchgeführt werden.

Das Ausführungsbeispiel gemäss Anspruch 4b hat den Vorteil, dass ein Messsignal im registrierenden Betrieb erfasst und unmittelbar oder mit geringer Zeitverzögerung mit einem aktuell bestimmten Korrekturfaktor F umgerechnet bzw. korrigiert werden kann. Im aktuellen Korrekturfaktor F können beispielsweise gemessene oder prognostizierte Werte des Sensorfehlerfaktors $f_i$, des Verbrauchsprofils $l_i$ und gegebenenfalls des Heizwerts $H_i$ berücksichtigt werden. Dadurch lässt sich ein registrierender Gaszähler mit höchster Messgenauigkeit realisieren. Die aktuelle Messsignalkorrektur kann im Gaszähler oder ausserhalb des Gaszählers durchgeführt werden.

Das Ausführungsbeispiel gemäss Anspruch 5 hat den Vorteil, dass bei bekannter Gaszusammensetzung der Sensorfehlerfaktor $f_i$ und bei Bedarf der Heizwert $H_i$ unmittelbar bestimmbar sind.

Das Ausführungsbeispiel gemäss Anspruch 6 hat den Vorteil, dass die Gaszusammensetzung bereits beim Betreiber bekannt ist oder vom Betreiber einfach bestimmbar ist und/oder mittels bekannter Simulationsmodelle für Gasströmungen im Netz berechnet werden kann.

Das Ausführungsbeispiel gemäss Anspruch 7 hat den Vorteil, dass der Sensorfehlerfaktor $f_i$, das Verbrauchsprofil $l_i$ und gegebenenfalls der Heizwert $H_i$ als Funktion der Zeit oder Temperatur dargestellt und gemeinsam gemittelt werden können.

Die Ausführungsbeispiele gemäss Anspruch 8 und 9 haben den Vorteil, dass dasjenige Gasverbrauchs- oder Lastprofil $l_i$ des lokalen Gasabonnenten gewählt werden kann, das einfach bestimmbar und gegebenenfalls einfach aktualisierbar ist, das wenig Rechenaufwand und insbesondere Speicherbedarf erfordert und/oder das die grösste Voraussagekraft für den zu erwartenden Gasverbrauch hat.

Die Ausführungsbeispiele gemäss Anspruch 10-12 betreffen konkrete Rechenvorschriften zur exakten Berechnung des Korrekturfaktors F bei Verwendung des Gaszählers als Volumen-, Gasmassen- oder Gasenergiemessgerät.

Die Ausführungsbeispiele gemäss Anspruch 13-15 betreffen eine Kalibration des Gaszählers als Energiemessgerät, wobei insbesondere eine inhärente Abhängigkeit des thermischen Durchfluss-Sensorsignals vom Heizwert $H_i$

des Gases berücksichtigt werden kann, um die Genauigkeit der Gasenergiemessung zu verbessern.

In einem zweiten Aspekt besteht die Erfindung in einem Gaszähler zum Messen eines Gasbezugs, insbesondere im privaten, öffentlichen oder industriellen Bereich, wobei der Gaszähler an einem Gasbezugsort eines Gasversorgungsnetzes angeordnet ist und einen Durchflusssensor und eine Mess- und Auswerteeinheit zur Bestimmung eines Messsignals $V_s$, $V_{ns}$, $M_s$, $E_s$ für einen Mengen- und/oder Energieverbrauch des Gases aufweist, wobei ferner Rechenmittel eingerichtet zur Bestimmung und/oder Speicherung eines typischerweise gasartabhängigen Sensorfehlerfaktors $f_i$ (auch $f_i'$, $f_i''$, $f_i'''$) des Gaszählers und eines für den Gasbezugsort charakteristischen Verbrauchsprofils $l_i$ (auch $l_i'$, $L_i$) sowie zur Berechnung eines Korrekturfaktors F durch gewichtete Mittelung des Sensorfehlerfaktors $f_i$ mit dem Verbrauchsprofil $l_i$ vorhanden sind und ferner Rechenmittel zur Umrechnung des Messsignals $V_s$, $V_{ns}$, $M_s$, $E_s$ mittels des Korrekturfaktors F in einen Ausgabewert $V_n$, M, E des Gaszählers vorhanden sind. Bevorzugt ist ein Datenspeicher zur Speicherung des Sensorfehlerfaktors $f_i$ und des Verbrauchsprofils $l_i$ als Funktion einer gemeinsamen Zeitvariablen und/oder Temperaturvariablen vorhanden und/oder sind die Rechenmittel und/oder der Datenspeicher ausserhalb des Gaszählers oder im Gaszähler angeordnet.

Die Ausführungsbeispiele gemäss Ansprüchen 17-19 ermöglichen einen besonders einfachen Aufbau und Betrieb des Gaszählers als Energiemessgerät.

Weitere Ausführungen, Vorteile und Anwendungen der Erfindung ergeben sich aus abhängigen Ansprüchen sowie aus der nun folgenden Beschreibung und den Figuren.

## KURZE BESCHREIBUNG DER ZEICHNUNG

Es zeigen:

Fig. 1    im Querschnitt ein durchströmtes Rohr mit einem thermischen Gaszähler mit Mitteln zur verbesserten Messsignalkorrektur;

Fig. 2    schematisch ein Gasverteilnetz;

Fig. 3    ein Lastprofil eines Gasverbrauchers an einem Gasbezugsort; und

Fig. 4    Messkurven für Erdgas zum Nachweis eines partiell korrelierten Verhaltens von Monatsmittelwerten von Sensorsignalen des thermischen Gaszählers mit Heizwerten des Erdgases.

In den Figuren sind gleiche Teile mit gleichen Bezugszeichen versehen.

## WEGE ZUR AUSFÜHRUNG DER ERFINDUNG

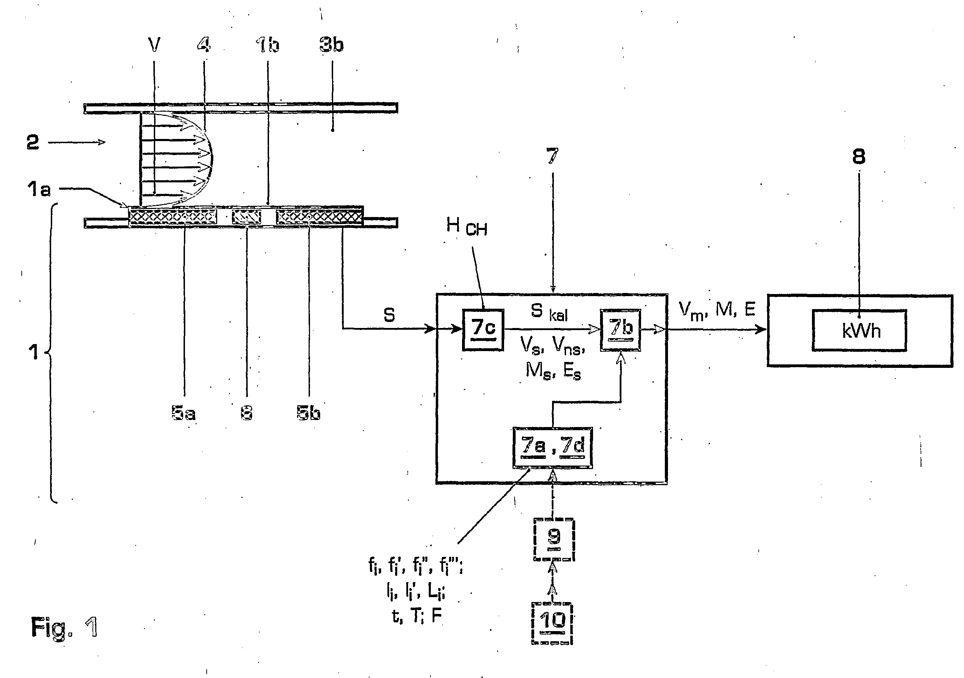

Fig. 1 zeigt einen Gaszähler 1 umfassend einen thermischen Durchfluss- oder Massenflusssensor 1a, der ein in einem Strömungskanal oder Rohr 2 angeordnetes Sensorelement 1a und eine Mess- und Auswerteeinheit 7 umfasst. Im Rohr 2 strömt ein Gas 3b mit einem Strömungs- oder Geschwindigkeitsprofil 4. Das Sensorelement 1a ist einer zu messenden Strömungsgeschwindigkeit v ausgesetzt. Der Durchflusssensor 1a umfasst ein Heizelement 6, stromaufwärts einen ersten Temperatursensor 5a und stromabwärts einen zweiten Temperatursensor 5b. Aus Temperatursignalen $T_1$, $T_2$ der Temperatursensoren 5a, 5b kann bekanntermassen ein Massenfluss- oder Normvolumenflusssignal S bestimmt werden. Die prinzipielle Funktionsweise beruht darauf, dass eine vom Heizelement 6 erzeugte Temperaturverteilung durch die Strömung 4 asymmetrisch wird und ein Temperaturunterschied $T_1$-$T_2$ an den Temperatursensoren 5a, 5b als Mass für die Strömungsgeschwindigkeit v oder den Massenfluss dm/dT verwendet wird. In guter Näherung gilt Massenflusssignal S proportional zu Temperaturdifferenz $T_1$-$T_2$. Im vorliegenden Fall werden zudem durch die Messmittel 7 aus dem Massenflusssignal S oder allgemein Sensorsignal S des Durchflusssensors 1a mit Hilfe eines ersten, auf ein Basis-Gasgemisch bezogenen Basis-Heizwertfaktors $H_{CH}$ Energiesignale $E_s$ bestimmt und ausgegeben. Auf diese Weise wird eine Kalibration des Gaszählers 1 als Energiemessgerät realisiert. Die Kalibration als Energiemessgerät ist in der WO 01/96819 A1 offenbart. Das dort beschriebene CMOS-Anemometer ist besonders geeignet als Sensorelement 1a des Durchflusssensors.

Erfindungsgemäss wird vom Gaszähler 1 ein typischerweise gasartabhängiger Sensorfehlerfaktor $f_i$, $f_i'$, $f_i''$, $f_i'''$ und ein kundenspezifisches Verbrauchsprofil $l_i$, $l_i'$, $L_i$ bestimmt oder erfasst, daraus ein Korrekturfaktor F berechnet und mit diesem ein Messsignal $V_s$, $V_{ns}$, $M_s$, $E_s$ des Gaszählers 1, insbesondere ein Energiesignal $E_s$, in einen Ausgabewert $V_n$, M, E, insbesondere eine Gasenergie E, mit verbesserter Kalibrationsgenauigkeit umgerechnet. Das Verfahren wird im Laufe der Beschreibung im Detail und in verschiedenen Ausführungsformen dargestellt. -

Allgemein kann für die Funktionsfähigkeit des Gaszählers 1 als Volumen-, Massen- oder Energiemeter 1 statt des Durchflusssensors 1a mit zwei Temperatursensoren 5a, 5b und insbesondere statt des CMOS-Anemometers 1a auch ein thermischer Durchflusssensor verwendet werden, bei welchem das Gas 3b über ein Sensorelement geführt wird, welches ein Heizmittel zur Temperaturänderung und ein Sensormittel zur Bestimmung seiner Temperatur aufweist, wobei die flussabhängige Temperaturänderung wiederum ein Mass für den Durchfluss oder Massenfluss ist. Alternativ kann der thermische Durchflusssensor 1a auch mit nur einem stromaufwärts angeordneten Temperatursensor 5a betrieben werden. Das erfindungsgemässe Verfahren kann auch mit einem beliebigen, nicht thermischen Gaszähler 1 ausgeführt werden, der auf einen Durchfluss, z. B. einen Massenfluss, kalibrierte Signale liefert. Generell kann der Massenfluss dm/dt in Massen- oder bei gleichbleibender Gasart in Normvolumeneinheiten, z. B. in kg/min, angegeben werden oder mit Hilfe der Dichte $\rho$ aus einem Volumenfluss dV/dt bestimmt werden gemäss dm/dt=$\rho$*dV/dt.

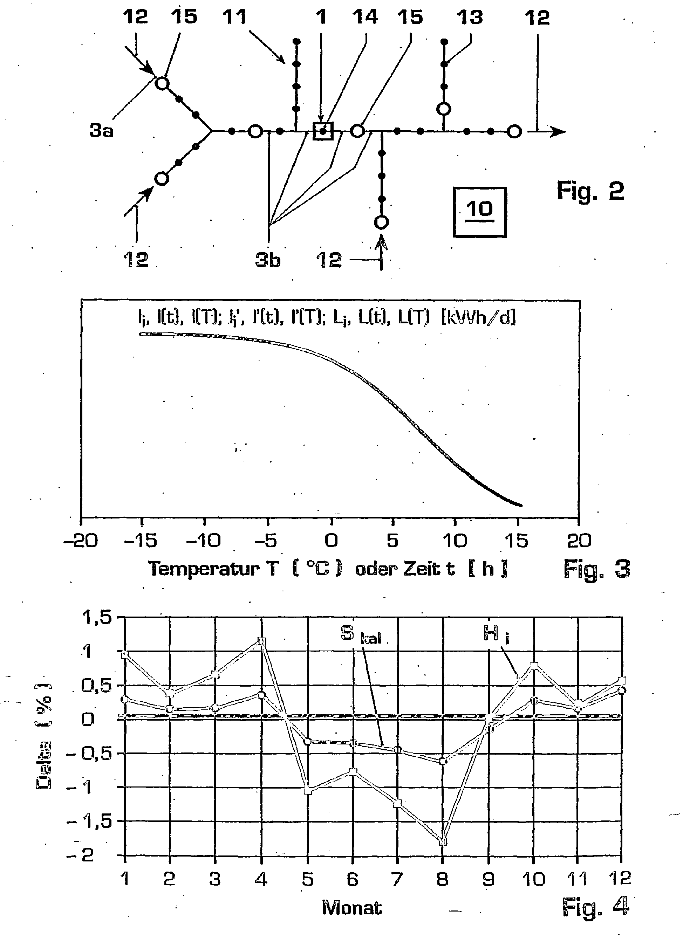

Fig. 2 zeigt ein Schema eines Gasversorgungsnetzes 11 mit Gaseinspeisungsorten 12, Verbrauchern 13 und Messstellen 15, insbesondere zur Durchflussmessung und gegebenenfalls Druck- oder Temperaturmessung. Das Verteilnetz 11 wird von einer Zentrale oder einem Betreiber 10 gesteuert und überwacht. Der Gasbezugsort, an dem ein erfindungsgemässer Gaszähler 1 installiert ist, ist beispielhaft mit 14 bezeichnet. Von einem Betreiber 10 des Gasversorgungsnetzes 11 kann eine eingespeiste Gaszusammensetzung 3a oder eine am Gasbezugsort 14 vorhandene Gaszusammensetzung 3b beispielsweise aus Erfahrungswerten, Messwerten, Prognosewerten oder daraus abgeleiteten Werten der Gasqualität bestimmt werden. Die Gaszusammensetzung 3b am Gasbezugsort 14 kann auch aus der eingespeisten Gasqualität mittels Simulationsrechnung für Gasströmungen im Gasversorgungsnetz 11 zumindest näherungsweise berechnet werden. Verfahren hierzu sind beispielsweise dem eingangs erwähnten Artikel von D. Hoburg und P. Ulbig zu entnehmen in.

Bevorzugt wird der Gaszähler 1 auf herkömmliche Weise nichtregistrierend betrieben, ab und zu ausgelesen und nachträglich das integrale Messsignal $V_s$, $V_{ns}$, $M_s$, $E_s$ in den präziseren Ausgabewert $V_n$, M, E umgerechnet. Die Umrechnung kann im Gaszähler 1 oder bevorzugt ausserhalb, beispielsweise beim Netzbetreiber 10, nachträglich durchgeführt werden.

Das Verfahren kann auch auf einen registrierenden Gaszähler 1 angewendet werden. Hierfür umfasst der Gaszähler 1 eine Empfangseinheit 9 zum Empfang von Heizwert-Daten einer am Gasbezügsort 14 vorhandene Gaszusammensetzung 3b von einer externen Einheit 10, insbesondere einem Betreiber 10 des gesamten Gasnetzes 11 oder eines Teilnetzes. Der Betreiber 10 kann selber oder durch externe Stellen Messdaten erheben und Analyse-Mittel zur Bestimmung der Gaszusammensetzung 3a einsetzen. Er kann dem lokalen Gaszähler 1 Rohdaten oder aufbereitete Daten, insbesondere spezifische Heizwertprofil $H_i$, $H_i'$, für die lokale oder im relevanten Subteilnetz vorhandene Gaszusammensetzung 3b liefern. Die Berechnung und Datenübermittlung an den Gaszähler 1 kann in vorgebbaren Zeitintervallen wiederholt werden. Die Zuverlässigkeit der Energiemessung wird deutlich erhöht, da unter Verwendung globaler und lokaler Daten eine verbesserte Heizwertkorrektur durchgeführt werden kann. Die globalen Daten betreffen die Gaseinspeisung und Gasverteilung im Netz. Sie sind beim Betreiber 10 vorhanden und können auf an sich bekannte Weise zur Bestimmung einer lokalen, auf den Gasbezugsort 14 bezogenen Gaszusammensetzung 3b verwendet werden. Daten über das lokale, vom Gaszähler 1 erfassbare Gasverbrauchsverhalten $l_i$, $l_i'$, $L_i$ des Kunden können direkt vor Ort gesammelt oder anderweitig bestimmt werden. Durch Zusammenführung dieser Daten wird der Gasenergiebezug E vom Energiemessgerät 1 mit deutlich verbesserter Genauigkeit bestimmt. Die Zusammenführung der Daten und die Umrechnung vom Messsignal $V_s$, $V_{ns}$, $M_s$, $E_s$ auf den präziseren Ausgabewert $V_n$, M, E kann im Gaszähler 1 oder ausserhalb des Gaszählers 1, beispielsweise beim Netzbetreiber 10, durchgeführt werden. Abweichend von der Darstellung in Fig. 1 dient dann 9 als Sendeeinheit zur Übermittlung des Messsignale $V_s$, $V_{ns}$, $M_s$, $E_s$ zur Zentrale 10, wo bevorzugt die Recheneinheiten 7a, 7b und/oder der Datenspeicher 7d vorhanden sind.

Fig. 3 zeigt ein Lastprofil des Gasverbrauchers am Bezugsort 14. Das Verbrauchsprofil $l_i$, $l_i'$, $L_i$ kann ein auf ein Normvolumen $V_n$ bezogenes Gasmengenlastprofil 1(T), ein auf eine Gasmasse M bezogenes Gasmassenlastprofil $l_i'$ (T) oder ein auf eine Gasenergie E bezogenes Gasenergielastprofil $L_i$(T) sein. Beispielhaft ist ein Gasverbrauchsprofil 1(T) z. B. in Energieeinheiten pro Tag (kWh/d) gegen eine Temperatur T in °C aufgetragen. Das Gasverbrauchsverhalten kann beispielsweise durch eine Funktion 1(T) = (A+$e^{B*T+C}$)$^{-1}$+D approximiert werden, wobei A, B, C und D bestimmbare, verbraucherspezifische Parameter sind. Andere Funktionen oder Näherungsformeln 1(T) zur Approximation oder Prognose des Gasbezugsverhaltens sind auch möglich, ebenso die tabellarische Speicherung von Stützstellenwerten $l_i$ bei diskreten Temperaturwerten $T_i$ mit i = ganzzahliger Index. Das Verbrauchsprofil $l_i$, $l_i'$, $L_i$ kann global für einen den Gasbezugsort 14 umfassenden Abschnitt des Gasversorgungsnetzes 11 oder lokal für den Gasbezugsort 14 bestimmt werden. Der funktionelle Zusammenhang l(T) oder Stützstellenwerte $l_i$ ($T_i$) können aus Erfahrungswerten, Messwerten, Prognosewerten oder daraus abgeleiteten Werten für einen zu erwartenden Gasverbrauch am Gasbezugsort 14 gewonnen werden. Die Temperaturvariable T kann eine Aussentemperatur oder einen Temperaturmittelwert am Gasbezugsort 14 bezeichnen. Alternativ kann das Lastprofil $l_i$, $l_i'$, $L_i$ für eine Zeitvariable, insbesondere in Abhängigkeit einer Tageszeit, eines Wochentags, eines Monats oder eines Jahresverlaufs, definiert werden.

Der Sensorfehlerfaktor $f_i$, $f_i'$, $f_i''$, $f_i'''$ und insbesondere ein Heizwert oder Heizwertprofil $H_i$, $H_i'$ können aus der Gaszusammensetzung 3a, 3b beispielsweise mittels Kalibrationstabellen bestimmt werden. Mit Vorteil sind die Gaszusammensetzung 3a, 3b und das Verbrauchsprofil $l_i$, $l_i'$, $L_i$ als Funktion der gemeinsamen Variablen t, T bekannt. Der Sensorfehlerfaktor $f_i$, $f_i'$, $f_i''$, $f_i'''$ und gegebenenfalls das Heizwertprofil $H_i$, $H_i'$ können auch selber unmittelbar als Funktion der gemeinsamen Variablen t, T gegeben und so mit dem Verbrauchsprofil $l_i$, $l_i'$, $L_i$ korrelierbar sein.

Im folgenden werden Ausführungsbeispiele für Rechenvorschriften zur Verwendung des Gaszählers 1 als verbessertes Volumen-, Massen- oder Energiemessgerät angegeben. Die Berechnung wird beispielhaft mit Stütz- oder Mittelwerten im mit i indizierten Zeitintervall durchgeführt; statt Aufsummieren von Stützstellenwerten können auch Integrale von Funktionswerten über die gemeinsame Variable, z. B. die Zeit, gebildet werden. Es gilt:

$$V_n = V_s \cdot K \qquad (G1)$$

$$K = 1 / \sum_i (l_i \cdot f_i) \qquad (G2)$$

mit Ausgabewert $V_n$=bezogenes Normvolumen (=über eine bestimmte Zeit aufsummiertes Normvolumen=Integral der Normvolumen-Durchflussrate für aktuelle Gaszusammensetzung 3a) und Messsignal $V_s$=im Zeitraum aufsummiertes Betriebsvolumensignal, K= Korrekturfaktor F, $l_i$=$V_{ni}/V_n$=Gasmengenlastprofil bezogen auf Normvolumen (Normierung z. B.: $\sum_i V_{n,i} = V_n$, d. h. $\sum_i l_i = 1$), $f_i$=$V_{si}/V_{ni}$=Sensorfehlerfaktor für Betriebsvolumenmessfehler, $V_{si}$=Betriebsvolumensignal (vom Gaszähler 1 angezeigt, druck- und temperaturabhängig) und $V_{ni}$=Normvolumen (tatsächlich bezogen) im Zeitintervall i. Es ist nämlich

$$V_{si} = V_{ni} \circ f_i = l_i \circ f_i \circ V_n \qquad (G3)$$

$$V_s = \sum_i V_{si} = V_n \circ \sum_i (l_i \circ f_i) \quad . \qquad (G4)$$

Wird vom Gaszähler 1 als Messsignal ein Normvolumensignal $V_{ns}$ (=über eine bestimmte Zeit vom Gaszähler 1 tatsächlich gemessenes aufsummiertes Normvolumen = Integral der gemessenen Durchflussrate für aktuelle Gaszusammensetzung 3a) erfasst und im Abrechnungszeitraum aufsummiert, so gilt

$$V_n = V_{ns} \cdot K' \qquad (G10)$$

$$K' = 1 / \sum_i (l_i \cdot f_i') \qquad (G20)$$

mit K'=Korrekturfaktor F, $f_i'$=$V_{nsi}/V_{ni}$=Sensorfehlerfaktor für Normvolumenmessfehler, $V_{nsi}$=Normvolumensignal und $V_{ni}$=Normvolumen im Zeitintervall i. Es ist nämlich

$$V_{nsi} = V_{ni} \circ f_i' = l_i \circ f_i' \circ V_n \qquad (G30)$$

$$V_{ns} = \sum_i V_{nsi} = V_n \circ \sum_i (l_i \circ f_i') \quad . \qquad (G40)$$

Wird vom Gaszähler 1 als Messsignal ein Gasmassensignal $M_s$ erfasst und im Abrechnungszeitraum aufsummiert und als Ausgabewert eine korrigierte Gasmasse M berechnet, so gilt

$$M = M_s \circ K'' \qquad (G11)$$

$$K'' = 1 / \sum_i (l_i' \circ f_i'') \qquad (G21)$$

mit K''=Korrekturfaktor F, $l_i'$=$M_i/M$=Gasmengenlastprofil bezogen auf Gasmasse, $f_i''$=$M_{si}/M_i$=Sensorfehlerfaktor für Gasmassenmessfehler, $M_{si}$=Gasmassensignal und $M_i$=Gasmasse im Zeitintervall i. Es ist nämlich

$$M_{si} = M_i \bullet f_i'' = l_i' \bullet f_i'' \bullet M \qquad (G31)$$

$$M_s = \sum_i M_{si} = M \bullet \sum_i (l_i' \circ f_i'') \quad . \qquad (G41)$$

Bei Verwendung des Gaszählers 1 als Gasenergiemessgerät 1 sind auch mehrere Formulierungen möglich von denen nachstehend einige beispielhaft angegeben werden. Wird vom Gaszähler 1 als Messsignal ein Betriebsvolumensignal $V_s$ erfasst und im Abrechnungszeitraum aufsummiert und als Ausgabewert eine korrigierte bezogene Gasenergie E berechnet, so gilt

$$E = V_s \circ H_{gew,s} \qquad (G12)$$

$$H_{gew,s} = \sum_i (H_i \circ l_i) / \sum_i (l_i \circ f_i) \quad \text{oder} \qquad (G22a)$$

$$H_{gew,s} = 1 / \sum_i (L_i \circ f_i/H_i) \qquad (G22b)$$

mit $H_{gew,s}$=gewichteter spezifischer Heizwert pro Normvolumen =Korrekturfaktor F, $H_i$=Heizwertprofil pro Normvolumen, $l_i=V_{ni}/V_n$=Gasmengenlastprofil bezogen auf Normvolumen $V_n$ oder $L_i=E_i/E$=Gasenergielastprofil bezogen auf Gasenergie E, $f_i=V_{si}/V_{ni}$=Sensorfehlerfaktor für Betriebsvolumenmessfehler, $V_{si}$=Betriebsvolumensignal, $V_{ni}$=Normvolumen und $E_i$=Gasenergie im Zeitintervall i. Mit (G4) ist nämlich einerseits

$$V_{ni} = V_n \bullet l_i = V_s \bullet l_i / \sum_i (l_i \bullet f_i) \qquad (G32a)$$

$$E_i = H_i \bullet V_{ni} \qquad (G42a)$$

$$E = \sum_i E_i = V_s \sum_i (H_i \bullet l_i) / \sum_i (l_i \bullet f_i) \qquad (G52a)$$

und andererseits

$$E_i = E \bullet L_i = H_i \bullet V_{ni} \qquad (G32b)$$

$$V_{si} = V_{ni} \circ f_i = E \circ L_i \circ f_i / H_i \qquad (G42b)$$

$$V_s = \sum_i V_{si} = E \sum_i (L_i \circ f_i/H_i) \qquad (G52b)$$

Wird vom Gaszähler 1 als Messsignal ein Normvolumensignal $V_{ns}$ erfasst und im Abrechnungszeitraum aufsummiert, so gilt

$$E = V_{ns} \circ H_{gew,ns} \qquad (G13)$$

$$H_{gew,ns} = \sum_i (H_i \circ l_i) / \sum_i (l_i \circ f_i') \quad \text{oder} \qquad (G23a)$$

$$H_{gew,ns} = 1 / \sum_i \left( L_i \circ f_i' / H_i \right) \qquad \text{(G23b)}$$

mit $H_{gew,ns}$=gewichteter spezifischer Heizwert pro Normvolumen=Korrekturfaktor F, $H_i$=Heizwertprofil pro Normvolumen, $l_i$=$V_{ni}/V_n$=Gasmengenlastprofil oder $L_i$=$E_i/E$=Gasenergielastprofil, $f_i'$=$V_{nsi}/V_{ni}$=Sensorfehlerfaktor für Normvolumen-messfehler, $V_{nsi}$=Normvolumensignal und $V_{ni}$= Normvolumen im Zeitintervall i. Mit (G40) gilt nämlich einerseits

$$V_{ns} = V_n \cdot \sum_i \left( l_i \cdot f_i' \right) \qquad \text{(G40)}$$

$$V_{ni} = V_n \circ l_i = V_{ns} \circ l_i / \sum_i \left( l_i \circ f_i' \right) \qquad \text{(G33a)}$$

$$E_i = H_i \circ V_{ni} \qquad \text{(G43a)}$$

$$E = \sum_i E_i = V_{ns} \sum_i \left( H_i \circ l_i \right) / \sum_i \left( l_i \circ f_i' \right) \quad . \qquad \text{(G53a)}$$

Andererseits gilt

$$E_i = E \circ L_i = H_i \circ V_{ni} \underline{\qquad} \qquad \text{(G33b)}$$

$$V_{nsi} = V_{ni} \circ f_i' = E \circ L_i \circ f_i' / H_i \qquad \text{(G43b)}$$

$$V_{ns} = \sum_i V_{nsi} = E \sum_i \left( L_i \circ f_i' / H_i \right) \quad . \qquad \text{(G53b)}$$

Wird vom Gaszähler 1 als Messsignal ein Gasmassensignal $M_s$ erfasst und im Abrechnungszeitraum aufsummiert, so gilt

$$E = M_s \circ H_{gew,M} \qquad \text{(G14)}$$

$$H_{gew,M} = \sum_i \left( H_i' \circ l_i' \right) / \sum_i \left( l_i' \circ f_i'' \right) \quad \text{oder} \qquad \text{(G24a)}$$

$$H_{gew,M} = 1 / \sum_i \left( L_i \circ f_i'' / H_i' \right) \qquad \text{(G24b)}$$

mit $H_{gew,M}$=gewichteter spezifischer Heizwert pro Masse= Korrekturfaktor F, $H_i'$ =Heizwertprofil pro Masse, $l_i'$ =$M_i/M$= Gasmassenlastprofil bezogen auf Gasmasse M, $f_i''$=$M_{si}/M_i$= Sensorfehlerfaktor für Gasmassenmessfehler, $M_{si}$=Gas-massensignal und $M_i$=Gasmasse im Zeitintervall i. Mit (G41) gilt nämlich einerseits

$$M_s = \sum_i M_{si} = M \cdot \sum_i \left( l_i' \cdot f_i'' \right) \qquad \text{(G41)}$$

$$M_i = M \cdot l_i' = M_s \cdot l_i' / \sum_i \left( l_i' \cdot f_i'' \right) \qquad \text{(G34a)}$$

$$E_i = H_i' \cdot M_i \qquad \text{(G44a)}$$

$$E = \sum_i E_i = M_s \sum_i (H_i' \bullet l_i') / \sum_i (l_i' \bullet f_i'') \quad . \qquad \text{(G54a)}$$

Andererseits gilt

$$E_i = E \circ L_i = H_i' \circ M_i \qquad \text{(G34b)}$$

$$M_{si} = M_i \circ f_i'' = E \circ L_i \circ f_i'' / H_i' \qquad \text{(G44b)}$$

$$M_s = \sum_i M_{si} = E \circ \sum_i (L_i \circ f_i'' / H_i') \quad . \qquad \text{(G54b)}$$

Wird vom Gaszähler 1 als Messsignal ein Gasenergiesignal $E_s$ erfasst und im Abrechnungszeitraum aufsummiert, so gilt

$$E = E_s \circ h_{gew} \qquad \text{(G15)}$$

$$h_{gew} = \sum_i (H_i \circ l_i') / \sum_i (H_i \circ l_i \circ f_i''') \quad \text{oder} \qquad \text{(G25a)}$$

$$h_{gew} = 1 / \sum_i (L_i \bullet f_i''') \qquad \text{(G25b)}$$

mit $h_{gew}$=gewichteter Heizwertkorrekturfaktor=Korrekturfaktor F, $H_i = E_i / V_{ni}$=Heizwertprofil pro Normvolumen, $l_i = V_{ni}/V_n$= Gasmengenlastprofil oder $L_i = E_i / E$=Gasenergielastprofil, $f_i'''=E_{si}/E_i$=Sensorfehlerfaktor für Gasenergiemessfehler, $E_{si}$=Gasenergiesignal und $E_i$=Gasenergie im Zeitintervall i. Einerseits gilt nämlich

$$E_i = H_i \circ V_{ni} = V_n \circ H_i \circ l_i \qquad \text{(G35a)}$$

$$E_{si} = E_i \circ f_i''' = V_n \circ H_i \circ l_i \circ f_i''' \qquad \text{(G45a)}$$

$$E_s = \sum_i E_{si} = V_n \sum_i (H_i \circ l_i \circ f_i''') \qquad \text{(G55a)}$$

$$E = \sum_i E_i = V_n \sum_i (H_i \circ l_i) \qquad \text{(G65a)}$$

$$E = E_s \circ \sum_i (H_i \circ l_i) / \sum_i (H_i \circ l_i \circ f_i''') \quad . \qquad \text{(G66a)}$$

Andererseits gilt

$$E_i = E \circ L_i \qquad \text{(G35b)}$$

$$E_{si} = E_i \circ f_i''' = E \circ L_i \circ f_i''' \qquad \text{(G45b)}$$

$$E_s = \sum_i E_{si} = E \sum_i (L_i \circ f_i''') \quad . \qquad \text{(G55b)}$$

Zur Energieverrechnung ist die Gasenergie E mit dem Preis pro Energieeinheit zu multiplizieren. Dieser Preis kann gegebenenfalls auch zeitabhängig sein, was bei der Heizwertgewichtung, insbesondere im Heizwertkorrekturfaktor $h_{gew}$, auch berücksichtigt werden kann.

In den oben genannten Beispielen ist der Sensorfehlerfaktor $f_i$, $f_i'$, $f_i''$, $f_i'''$ dimensionslos gewählt. Weitere Ausführungsbeispiele zur Bestimmung von Korrekturfaktoren F können dadurch gewonnen werden, dass andere Kombinationen von Messsignal und Ausgabewert gewählt werden und die Hilfsgrössen Sensorfehlerfaktor, Verbrauchsprofil und gegebenenfalls Heizwertprofil geeignet definiert werden, um Messsignal und Ausgabewert bzw. deren zeitlich gemittelte Werte miteinander zu verknüpfen. Beispielsweise kann man dimensionsbehaftete Sensorfehlerfaktoren einführen, z. B. $f_i^v = V_{si}/M_i$, um bei gegebenem dimensionslosen Sensorfehlerfaktor, Lastprofil, Heizwertprofil und/oder Messsignal statt auf einen Ausgabewert, z. B. Normvolumen, auf einen anderen Ausgabewert, z. B. Gasmasse, umzurechnen. Auch könnte von einem Energiesignal $E_s$ auf ein Normvolumen oder auf eine Gasmasse M umgerechnet werden. Solche und ähnliche Ausführungsformen seien hiermit explizit mitoffenbart.

Der Durchflusssensor 1a ist vorzugsweise ein thermischer Durchflusssensor 1a, mit dem ein auf eine Durchflussrate kalibriertes Sensorsignal $S_{kal}$ bestimmt wird. Zur Kalibration des Gaszählers 1 als Energiemessgerät 1 wird das kalibrierte Sensorsignal $S_{kal}$ unter Verwendung eines Basis-Heizwertfaktors $H_{CH}$ für ein Basis-Gasgemisch CH in das Gasenergiesignal $E_s$ kalibriert.

Gemäss der WO 01/96819 A1 erfolgt im thermischen Durch-flusssensor 1a, insbesondere im CMOS-Anemometer-Durchflusssensor 1a, eine inhärente automatische Heizwertnachführung bei abweichungen des aktuellen Gasgemisches 3b vom Basis-Gasgemisch CH. Da die inhärente Heizwertnachführung unvollständig ist, wird nun ausgehend von der ersten Energiekalibration für das Basis-Gasgemisch CH erfindungsgemäss eine zweite verbesserte Energiekalibration mit Hilfe des gewichteten Heizwertkorrekturfaktors $F = h_{gew}$ durchgeführt.

Für das genannte Gasenergiemessgerät 1 mit thermischem Durchflusssensor 1a wird das zugrundeliegende Messverfahren noch detaillierter beschrieben. Gemäss der WO 01/96819 A1 wird ein Sensorsignal $S_{N2}$ (vormals S) für ein Eichgas, typischerweise Stickstoff $N_2$ oder Luft, bestimmt und auf ein (unkorrigiertes) Massenflusssignal $S_m$ (vormals S(d($V_{N2,n}$)/dt), wobei d($V_{N2,n}$)/dt = Normvolumenfluss für Eichgas) kalibriert. Die Kalibration kann durch eine Sensoreichkurve $F(S_{N2})$ für das Eichgas unter Normbedingungen ausgedrückt werden, wobei $S_m$ proportional zu F$(_{SN}2)$ ist oder einfach $S_m = F(S_{N2})$. Das Massenflusssignal $S_m$ hängt noch von der Gassorte ab. Daher werden Abweichungen des Massenflusssignals $S_m$ von einem exakten Idealwert für ein Basis-Gasgemisch, typischerweise Erdgas oder allgemein ein Kohlenwasserstoffgemisch CH, durch einen Signal-Umrechnungsfaktor oder Sensorsignal-Korrekturfaktor $f_{N2-CH}$ korrigiert.

Somit gilt $S_M = S_m \cdot f_{N2-CH}$ mit $S_M$ = korrigiertes Massenflusssignal. Im Sinne dieser Offenbarung ist $S_M$ gleich oder proportional zu dem zuvor erwähnten kalibrierten Sensorsignal $S_{kal}$ des Durchflusssensors 1a. Ebenso sind die Gasnormvolumina $V_{ns,i}$ und $V_{ns}$ bei hinreichend konstanter Gasqualität gleich oder proportional zu den kalibrierten Sensorsignalen $S_{kal}$ oder mittleren Werten von $S_{kal}$ im zugehörigen Zeitintervall i. Das kalibrierte Sensorsignal $S_{kal}$ ist also ein Mass für und insbesondere proportional zu einer Durchflussrate der zu messenden Gaszusammensetzung 3b ist. Man kann daher $S_{kal} = S_m \cdot f_{N2-CH}$ schreiben, wobei ein eventuell erforderlicher Proportionalitätsfaktor in der Sensoreichkurve $F(S_{N2})$ berücksichtigt Wird. Schliesslich wird ein Energiesignal $E_s$ durch Multiplikation des kalibrierten Sensorsignals $S_{kal}$ mit einem Heizwert $H_{CH}$ (kalorimetrischer Wert pro Einheit der Durchflussgrösse, d. h. pro Standardvolumen oder pro Masse) des Basis-Gasgemisches bestimmt: $E_s = \int S_{kal} \circ H_{CH} \circ dt = f_{N2-CH} \circ H_{CH} \circ \int F(S_{N2}) \circ dt$ oder $E_s = S_{kal} \circ H_{CH}$ mit $S_{kal}$ = gemitteltes kalibriertes Sensorsignal.

Gemäss der WO 01/96819 A1 oder der EP 1 227 305 können für die genannten Grössen $S_{N2}$, $F(S_{N2})$, $f_{N2-CH}$ und $H_{CH}$ und daraus ableitbare Grössen auch geeignete Zeitmittelwerte verwendet werden.

Fig. 4 zeigt, wie von den Sensorsignalen $S_{kal}$ des Durchflusssensors 1a Heizwertschwankungen zu einem Bruchteil inhärent erfasst werden. Dieses Verhalten ist an sich aus der WO 01/96819 A1 bekannt und kann quantitativ im Gaszähler 1 beispielsweise als Sensorfehlerfaktor $f_i''' = E_{si}/E_i$ gespeichert werden. Der Sensorfehlerfaktor $f_i'''$ ist also proportional zu den Abweichungen zwischen den inhärent erfassten und den tatsächlichen Heizwertschwankungen der Gaszusammensetzung 3b am Gasbezugsort 14 oder zu einem Mittelwert dieser Abweichungen gewählt. Diese Abweichungen, d. h. die inhärente Heizwertabhängigkeit der auf ein Basis-Gasgemisch CH bezogenen Energiesignale $E_s$, werden korrigiert, indem der Sensorfehlerfaktor $f'''$ im erfindungsgemässen Korrekturfaktor F berücksichtigt wird und die Energiesignale $E_s$ mit Hilfe des Korrekturfaktors F nachträglich und/oder offline auf verbesserte oder korrigierte oder tatsächliche Gasenergie-Ausgabewerte E kalibriert werden.

Die Erfindung hat auch einen Gaszähler 1 zur Ausführung des oben beschriebenen Verfahrens zum Gegenstand. Gemäss Fig. 1 und 2 ist der Gaszähler 1 an einem Gasbezugsort 14 eines Gasversorgungsnetzes 11 angeordnet und weist einen Durchflusssensor 1a und eine Mess- und Auswerteeinheit 7 zur Bestimmung eines Messsignals $V_s$, $V_{ns}$, $M_s$, $E_s$ für einen Mengen- und/oder Energieverbrauch des Gases 3a auf, wobei die Mess- und Auswerteeinheit 7 Rechenmittel 7a zur Bestimmung und/oder Speicherung eines Sensorfehlerfaktors $f_i$, $f_i'$, $f_i''$, $f_i'''$ des Gaszählers 1 und eines für den Gasbezugsort 14 charakteristischen Verbrauchsprofils $l_i$, $l_i'$, $L_i$ sowie zur Berechnung eines Korrekturfaktors F durch gewichtete Mittelung des Sensorfehlerfaktors $f_i$, $f_i'$, $f_i''$, $f_i'''$ mit dem Verbrauchsprofil $l_i$, $l_i'$, $L_i$ aufweist und die

Mess- und Auswerteeinheit 7 ferner Rechenmittel 7b zur Umrechnung des Messsignals $V_s$, $V_{ns}$, $M_s$, $E_s$ mittels des Korrekturfaktors F in einen Ausgabewert $V_n$, M, E des Gaszählers 1 aufweist. Vorzugsweise umfasst die Mess- und Auswerteeinheit 7 einen Datenspeicher 7d zur Speicherung des Sensorfehlerfaktors $f_i$, $f_i'$, $f_i''$, $f_i'''$ und des Verbrauchsprofils $l_i$, $l_i'$, $L_i$ als Funktion einer gemeinsamen Zeitvariablen und/oder Temperaturvariablen T.

Mit Vorteil ist der Durchflusssensor 1a ein thermischer Durchflusssensor 1a, insbesondere ein CMOS-Anemometer 1a, mit einem Heizdraht 6 und stromaufwärts und stromabwärts angeordneten Temperatursensoren 5a, 5b. Die Mess- und Auswerteeinheit 7 weist insbesondere Mittel zur Kalibration des Gasbezugs in Energieeinheiten kW/h auf.

Ferner kann die Mess- und Auswerteeinheit 7 Rechenmittel 7c zur Bestimmung eines kalibrierten Sensorsignals $S_{kal}$ mittels Umwertung von einem Eichgas auf ein Basis-Gasgemisch CH und zur Bestimmung eines Gasenergiesignals $E_s$ mittels Multiplikation des kalibrierten Sensorsignals $S_{kal}$ mit einem Basis-Heizwertfaktor $H_{CH}$ umfassen. Insbesondere sind Rechenmittel 7a zur Bestimmung und/oder Speicherung eines Sensorfehlerfaktors $f_i'''$ für Gasenergiemessung vorhanden für die Erfassung und Korrektur einer inhärenten Abhängigkeit des kalibrierten Sensorsignals $S_{kal}$ des Durchflusssensors 1a von Heizwertschwankungen. Die Recheneinheiten 7a, 7b, 7c und/oder der Datenspeicher 7d können auch ausserhalb des Gaszählers 1 angeordnet sein.

## BEZUGSZEICHENLISTE

| | |
|---|---|
| 1 | Gaszähler |
| 1a | thermischer Massenflusssensor, CMOS-Sensor |
| 1b | Membran |
| 2 | Strömungskanal, Rohr |
| 3a | Gaszusammensetzung im Gasnetz; Erdgas |
| 3b | Gaszusammensetzung am Bezugsort; Erdgas |
| 4 | Strömungsprofil |
| 5a, 5b | erster, zweiter Temperatursensor, Thermoelemente |
| 6 | Heizelement, Heizdraht |
| 7 | Mess- und Auswerteeinheit |
| 7a, 7b, 7c | Rechenmittel |
| 7d | Datenspeicher |
| 8 | Signalausgabe, Display |
| 9 | Empfangseinheit, Sendeeinheit (optional) |
| 10 | externe Einheit, Betreiber, Zentrale |
| 11 | Gasversorgungsnetz |
| 12 | Gaseinspeisung |
| 13 | Verbraucher |
| 14 | Gasbezugsort |
| 15 | Durchflussmessung, Messstelle des Betreibers |
| | |
| CH | Erdgas, Basis-Gasgemisch |
| $F(S_{N2})$ | Sensoreichkurve |
| $f_{N2-CH}$ | Signal-Umrechnungsfaktor |
| $f_i$, $f_i'$, $f_i''$, $f_i'''$ | Sensorfehlerfaktor |
| F | Korrekturfaktor |
| $H_{CH}$ | Basis-Heizwertfaktor für Basis-Gasgemisch |
| $H_i$, $H_i'$ | Heizwert, Heizwertprofil der Gaszusammensetzung |
| $H_{gew,s}$, $Hg_{ew,ns}$ | gewichteter Heizwert pro Normvolumen |
| $H_{gew,M}$ | gewichteter Heizwert pro Gasmasse |
| $h_{gew}$ | gewichteter Heizwertkorrekturfaktor |
| K, K', K'' | Volumenkorrekturfaktor, Massenkorrekturfaktor |
| $l_i'$, $l_i'$, $L_i$ | Gasverbrauchsprofil, Lastprofil |
| S | Sensorsignal |
| $S_m$ | unkorrigiertes Massenfluss- oder Sensorsignal |
| $S_M$ | korrigiertes Massenflusssignal für Basis-Gasgemisch |
| $S_{N2}$ | Eichgas-Sensorsignal |
| $S_{kal}$ | kalibriertes Sensorsignal |
| t | Zeitvariable |

**EP 1 585 946 B1**

| | |
|---|---|
| $T, T_1, T_2$ | Temperaturen |
| $v$ | Flussgeschwindigkeit |
| $V_s, V_{ns}, M_s, E_s$ | Messsignal |
| $V_n, M, E$ | Ausgabewert |
| $i$ | Index für Zeitintervall |
| $s$ | Index für Messsignal |

**Patentansprüche**

1. Verfahren zum Messen eines Gasbezugs, insbesondere im privaten, öffentlichen oder industriellen Bereich, mittels eines Gaszählers (1), der an einem Gasbezugsort (14) eines Gasversorgungsnetzes (11) angeordnet ist, wobei vom Gaszähler (1) mit Hilfe eines Durchflusssensors (1a) ein Messsignal $V_s, V_{ns}, M_s, E_s$) für einen Mengenverbrauch und/oder Energieverbrauch des Gases (3a) bestimmt wird, **dadurch gekennzeichnet, dass**

   a) ein bekannter Sensorfehlerfaktor ($f_i, f_i', f_i'', f_i'''$) des Gaszählers (1) zur Erfassung von Abweichungen zwischen dem vom Gaszähler (1) gemessenen Verbrauch und dem tatsächlichen Verbrauch, und
   b) ein für den Gasbezugsort (14) bekanntes, charakteristisches Verbrauchsprofil ($l_i, l_i', L_i$) für den Gasverbrauch
   c) als Funktion einer gemeinsamen Variablen (t, T) für einen Abrechnungszeitraum definiert werden und
   d) ein auf den Abrechungszeitraum bezogener, verbrauchsgewichteter Korrekturfaktor (F) durch eine zeitliche Mittelung des Sensorfehlerfaktors ($f_i, f_i', f_i'', f_i'''$) gewichtet mit dem Verbrauchsprofil ($l_i, l_i', L_i$) bestimmt wird und das Messsignal ($V_s, V_{ns}, M_s, E_s$) mit dem Korrekturfaktor (F) in einen Ausgabewert ($V_n, M, E$) umgerechnet wird.

2. Verfahren nach Anspruch 1, **dadurch gekennzeichnet, dass**

   a) das Messsignal ($V_s, V_{ns}, M_s, E_s$) ein vom Gaszähler (1) gemessenes Betriebsvolumensignal ($V_s$), Normvolumensignal ($V_{ns}$), Gasmassensignal ($M_s$) oder Energiesignal ($E_s$) ist und/oder
   b) der Ausgabewert (Vn, M, E) ein bezogenes Normvolumen ($V_n$), eine bezogene Gasmasse (M) oder eine bezogene Gasenergie (E) ist und/oder
   c) der Ausgabewert ($V_n, M, E$) durch Multiplikation des Messsignals ($V_s, V_{ns}, M_s, E_s$) mit dem Korrekturfaktor F berechnet wird.

3. Verfahren nach einem der vorangehenden Anspruche, **dadurch gekennzeichnet, dass**

   a) die Mittelung eine Summation und/oder Integration der die gemeinsame Variable (t, T) von Produkten umfass, die den Sensorfehlerfaktor ($f_i, f_i', f_i'', f_i'''$) und das Verbrauchsprofil ($l_i, l_i', L_i$) enthalten, und/oder
   b) die Mittelung unter Berücksichtigung eines auf die gemeinsame Variable (t, T) bezogenen Heizwertprofils ($H_i, H_i'$) durchgeführt wird wird/oder
   c) die Mittelung eine geeignete Normierungsfunktion umfasst.

4. Verfahren nach einem der vorangehenden Anspruche, **dadurch gekennzeichnet, dass**

   a) das Messsignal ($V_s, V_{ns}, M_s, E_s$) vom Gaszähler (1) in nichtregistrierendem Betrieb über einen langen Abrechungszeitraum aufsummiert wird und nachträglich außerhalb des Gaszählers (1) oder im Gaszähler (1) mit dem Korrekturfaktor (F) umgerechnet wird oder
   b) das Messsignal ($V_s, V_{ns}, M_s, E_s$) vom Gaszähler (1) in registrierendem Betrieb aktuell bestimmt, insbesondere über einen kurzen Zeitraum aufsummiert, wird und im Gaszähler (1) oder außerhalb des Gaszahlers (1) mit einem aktuell bestimmten Korrekturfaktor (F) umgerechnet wird.

5. Verfahren nach einem der vorangehenden Ansprüche, **dadurch gekennzeichnet, dass**

   a) aus einer Gaszusammensetzung (3a, 3b) der Sensorfehlerfaktor ($f_i, f_i', f_i'', f_i'''$) und insbesondere ein Heizwert oder Heizwertprofil (Hi, $H_i'$) insbesondere mittels Kalibrationstabellen bestimmt wird und
   b) insbesondere dass die Gaszusammensetzung (3a, 3b) als Funktion der gemeinsamen Variablen (t, T) bekannt ist.

6. Verfahren nach einem der vorangehenden Ansprüche, **dadurch gekennzeichnet, dass**

a) von einem Betreiber (10) des Gasversorgungsnetzes (11) eine eingespeiste Gaszusammensetzung (3a) oder eine am Gasbezugsort (14) vorhandene Gaszusammensetzung (33) beispielsweise aus Erfahrungswerten, Messwerten, Prognosewerten oder daraus abgeleiteten Werten der Gasqualität bestimmt wird und/oder

b) die Gaszusammensetzung (3b) am Gasbezugsort (14) aus der eingespeisten Gasqualität mittels Simulationsrechnung für Gasströmungen im Gasversorgungsnetz (11) zumindest näherungsweise berechnet wird.

7. Verfahren nach einem der vorangehenden Ansprüche, **dadurch gekennzeichnet, dass** die gemeinsame Variable (t, T) eine Zeitvariable (t), insbesondere eine Tageszeit, ein Wochentag, ein Monat oder ein Jahresverlauf, oder eine Temperatur (T), insbesondere ein Außentemperaturprofil oder ein Temperaturmittelwert am Gasbezugsort (14) bezogen auf den Abrechnungszeitraum, ist.

8. Verfahren nach einem der vorangehenden Ansprüche, **dadurch gekennzeichnet, dass**

a) das Verbrauchsprofil ($l_i$, $l_i'$, $L_i$) ein auf ein Normvolumen ($V_n$) bezogenes Gasmengenlastprofil ($l_i$), ein auf eine Gasmasse (M) bezogenes Gasmassenlastprofil ($l_i'$) oder ein auf eine Gasenergie (E) bezogenes Gasenergielastprofil ($L_i$) ist und/oder

b) das Verbrauchsprofil ($l_i$, $l_i'$, $L_i$) durch eine Näherungsformel ($l(t)$, $l(T)$; $l'(t)$, $l'(T)$; $L(t)$, $L(T)$ oder durch Stützwerte ($l(t_i)$, $l(T_i)$ ; $l'(t_i)$, $l'(T_i)$; $L(t_i)$, $L(T_i)$) angegeben wird.

9. Verfahren nach einem der vorangehenden Ansprüche, **dadurch gekennzeichnet, dass**

a) das Verbrauchsprofil ($l_i$, $l_i'$, $L_i$) global für einen den Gasbezugsort (14) umfassenden Abschnitt des Gasversorgungsnetzes (11) oder lokal für den Gasbezugsort (14) bestimmt wird und/oder

b) das Verbrauchsprofil ($l_i$, $l_i'$, $L_i$) aus Erfahrungswerten, Messwerten, Prognosewerten oder daraus abgeleiteten Werten des Gasverbrauchs am Gasbezugsort (14) erstellt wird.

10. Verfahren nach einem der vorangehenden Ansprüche, **dadurch gekennzeichnet, dass**

a) der Ausgabewert $V_n = V_s \cdot K$ ist, wobei $V_n$=Normvolumen bezogen und $V_s$=Betriebsvolumensignal aufsummiert im Abrechnungszeitraum, $K=1/\sum_i(l_i \cdot f_i)$ = Korrekturfaktor F, $l_i=V_{ni}/V_n$= Gasmengenlastprofil bezogen auf Normvolumen, $f_i=V_{si}/V_{ni}$=Sensorfehlerfaktor für Betriebsvolumenmessfehler, $V_{si}$=Betriebsvolumensignal und $V_{ni}$=Normvolumen im Zeitintervall i oder

b) der Ausgabewert $V_n=V_{ns} \cdot K'$ ist, wobei $V_n$=Normvolumen bezogen und $V_{ns}$=Normvolumensignal aufsummiert im Abrechnungszeitraum, $K'=1/\sum_i(l_i \cdot f_i')$=Korrekturfaktor F, $l_i=V_{ni}/V_n$=Gasmengenlastprofil bezogen auf Normvolumen, $f_i'=V_{nsi}/V_{ni}$=Senorfehlerfaktor f für Normvolumenmessfehler, $V_{nsi}$Normvolumensignal und $V_{ni}$=Normvolumen im Zeitintervall i oder

c) der Ausgabewert $M=M_s \circ K''$ ist, wobei M=Gasmasse bezogen und $M_s$=Gasmassensignal aufsummiert im Abrechnungszeitraum, $K''=1/\sum_i(l_i' \cdot f_i'')$=Korrekturfaktor, $l_i'=M_i/M$= Gasmengenlastprofil bezogen auf Gasmasse, $f_i''=M_{si}/M_i$=Sensorfehlerfaktor für Gasmassenmessfehler, $M_{si}$=Gasmassensignal und $M_i$=Gasmasse im Zeitintervall i.

11. Verfahren nach einem der Ansprüche 1-9, **dadurch gekennzeichnet, dass**

a) der Ausgabewert $E=V_s \cdot H_{gew,s}$ oder $E=V_{ns} \cdot H_{gew,ns}$ ist, wobei E=Gasenergie bezogen, $V_s$=Betriebsvolumensignal aufsummiert und $V_{ns}$=Normvolumensignal aufsummiert im Abrechnungszeitraum, wobei der Korrekturfaktor F ein gewichteter spezifischer Heizwert pro Normvolumen $H_{gew,s} = \sum_i(H_i \cdot l_i)/\sum_i(l_i \cdot f_i)$, $H_{gew,s} = 1/\sum_i(L_i \cdot f_i/H_i)$, $H_{gew,ns} = \sum_i(H_i \cdot l_i)/\sum_i(l_i \cdot f_i)$, oder

$H_{gew,ns} = 1/\sum_i(L_i \cdot f_i/H_i)$ ist mit $H_i$=Heizwertprofil pro Normvolumen, $l_i=V_{ni}/V_n$=Gasmengenlastprofil bezogen auf Normvolumen $V_n$ oder $L_i=E_i/E$=Gasenergielastprofil bezogen auf Gasenergie E, $f_i=V_{si}/V_{ni}$=Sensorfehlerfaktor für Betriebsvolumenmessfehler oder $f_i'=V_{nsi}/V_{ni}$=Sensorfehlerfaktor für Normvolumenmessfehler, $V_{si}$=Betriebsvolumensignal, $V_{nsi}$=Normvolumensignal, $V_{ni}$=Normvolumen und $E_i$=Gasenerige im Zeitintervall i oder

b) der Ausgabewert $E=M_s \circ H_{gew,M}$ ist, wobei E=Gasenergie bezogen und $M_s$=Gasmassensignal aufsummiert im Abrechnungszeitraum, wobei der Korrekturfaktor F ein gewichteter spezifischer Heizwert pro Masse $Hg_{ew,M} = \sum_i(H_i \cdot l_i)/\sum_i(l_i \cdot f_i'')$, oder

$H_{gew,M} = 1/\sum_i(L_i \cdot f_i''/H_i)$ ist mit $H_i'$=Heizwertprofil pro Masse, $l_i'=M_i/M$=Gasmassenlastprofil bezogen auf Gasmasse M, $f_i''=M_{si}/M_i$=Sensorfehlerfaktor für Gasmassenmessfehler, $M_{si}$= Gasmassensignal und $M_i$=Gasmasse im Zeitintervall i.

**12.** Verfahren nach einem der Ansprüche 1-9, **dadurch gekennzeichnet, dass** der Ausgabewert $E=E_s \circ h_{gew}$ ist, wobei $E$=Gasenergie bezogen und $E_s$=Gasenergiesignal aufsummiert im Abrechnungszeitraum, wobei der Korrekturfaktor F ein gewichteter Heizwertkorrekturfaktor $h_{gew} = \sum_i (H_i \cdot l_i)/\sum_i (H_i \cdot l_i \cdot f_i''')$ oder $h_{gew} = 1/\sum_i (L_i \cdot f_i''')$ ist mit $H_i$=Heizwertprofil pro Normvolumen, $l_i=V_{ni}/V_n$=Gasmengenlastprofil bezogen auf Normvolumen $V_n$ oder $L_i=E_i/E$=Gasenergielastprofil bezogen auf Gasenergie E, $f_i'''=E_{si}/E_i$=Sensorfehlerfaktor für Gasenergiemessfehler, $E_{si}$=Gasenergiesignal und $E_i$=Gasenerie im Zeitintervall i.

**13.** Verfahren nach Anspruch 12, **dadurch gekennzeichnet, dass**

a) der Durchflusssensor (1a) ein thermischer Durchflusssensor (1a) ist, mit dem ein auf eine Durchflussrate kalibriertes Sensorsignal ($S_{kal}$) bestimmt wird und
b) zur Kalibration des Gaszählers (1) als Energiemessgerät das kalibrierte Sensorsignal ($S_{kal}$) unter Verwendung eines Basis-Heizwertfaktors ($H_{CH}$) für ein Basis-Gasgemisch (CH) in das Gasenergiesignal $E_s$ kalibriert wird.

**14.** Verfahren nach Anspruch 13, **dadurch gekennzeichnet, dass** für die Kalibration des Gaszahlers (1) als Energiemessgerät

a) Eichgas-Sensorsignale ($S_{N2}$) die Durchflussrate eines Eichgases bestimmt und in Form einer Sensoreichkurve ($F(S_{N2})$) im Gaszähler (1) gespeichert werden und
b) durch Multiplikation der Sensoreichkurve ($F(S_{N2})$) mit einem Signal-Umrechnungsfaktor ($f_{N2\text{-}CH}$) das kali-brierte Sensorsignal ($S_{kal}$) erhalten wird und aus diesem durch Multiplikation mit dem Basis-Heizwertfaktor ($H_{CH}$) das Gasenergiesignal E, bestimmt wird.

**15.** Verfahren nach einem der Ansprüche 13-14, **dadurch gekennzeichnet, dass**

a) von den kalibrierten Sensorsignalen ($S_{kal}$) des Durchflusssensors (1a) Heizwertschwankungen zu einem Bruchteil inhärent erfasst werden und
b) Abweichungen zwischen den inhärent erfassten und tatsächlichen Heizwertschwankungen der Gaszusammensetzung (3a) am Gasbezugsort (14) mit Hilfe des Sensorfehlerfaktors fi''' für Gasenergiemessfehler erfasst und bei der Umrechnung des Gasenergiesignals $E_s$ in die Gasenergie E korrigiert werden.

**16.** Gaszähler (1) zum Messen eines Gasbezugs, insbesondere im privaten, öffentlichen oder industriellen Bereich, wobei der Gaszähler (1) einen Durchflusssensor (1a) und eine Mess- und Auswerteeinheit (7) zur Bestimmung eines Messsignals ($V_s$, $V_{ns}$, $M_s$, $E_s$) für einen Mengen und/oder Energieverbrauch des Gases (3a) aufweist, **dadurch gekennzeichnet, dass**

a) Rechenmittel (7a) eingerichtet zur Bestimmung und/oder Speicherung eines Sensorfehlerfaktors ($f_i$, fi', $f_i''$, $f_i'''$ ) des Gaszählers (1) und eines für den Gasbezugsort (14) charakteristischen Verbrauchsprofils ($l_i$, $l_i'$, $L_i$) sowie zur Berechnung eines Korrekturfaktors F durch gewichtete zeitliche Mittelung des Sensorfehlerfaktors ($f_i$, $f_i'$, $f_i''$ , $f_i'''$) mit dem Verbrauchsprofil ($l_i$, $l_i'$, $L_i$) vorhanden sind und
b) Rechenmittel (7b) eingerichtet zur Umrechnung des Messsignals ($V_s$, $V_{ns}$, $M_s$, $E_s$) mittels des Korrekturfaktors F in einen Ausgabewert ($V_n$, M, E) des Gaszählers (1) vorhanden sind.

**17.** Gaszähler (1) nach Anspruch 16, **dadurch gekennzeichnet, dass**

a) ein Datenspeicher (7d) zur Speicherung des Sensorfehlerfaktors ($f_i$, $f_i'$, $f_i''$, $f_i'''$) und des Verbrauchsprofils ($l_i$, $l_i'$, $L_i$) als Funktion einer gemeinsamen Zeitvariablen und/oder Temperaturvariablen (T) vorhanden ist und/oder
b) die Rechenmittel (7a, 7b, 7c) und/oder ein Datenspeicher (7d) außerhalb des Gaszählers (1) oder im Gaszähler (1) angeordnet sind.

**18.** Gaszähler (1) nach einem der Ansprüche 16-17, **dadurch gekennzeichnet, dass**

a) der Durchflusssensor (1a) ein thermischer Durchflusssensor (1a), insbesondere ein CMOS-Anemometer (1a), mit einem Heizdraht (6) und stromaufwärts und stromabwärts angeordneten Temperatursensoren (5a, 5b) ist und/oder
b) die Mess- und Auswerteeinheit (7) Mittel zur Kalibration des Gasbezugs in Energieeinheiten (kW/h) aufweist.

**19.** Gaszähler (1) nach einem der Ansprüche 16-18, **dadurch gekennzeichnet, dass**

a) die Mess- und Auswerteeinheit (7) Rechenmittel (7c) zur Bestimmung eines kalibrierten Sensorsignals ($S_{kal}$) mittels Umwertung von einem Eichgas auf ein Basis-Gasgemisch (CH) und zur Bestimmung eines Gasenergiesignals $E_s$ mittels Multiplikation des kalibrierten Sensorsignals ($S_{kal}$) mit einem Basis-Heizwertfaktor ($H_{CH}$) aufweist und

b) insbesondere dass Rechenmittel (7a) zur Bestimmung und/oder Speicherung eines Sensorfehlerfaktors $f_i'''$ für Gasenergiemessung vorhanden sind für die Erfassung und Korrektur einer inhärenten Abhängigkeit des kalibrierten Sensorsignals ($S_{kal}$) des Durchflusssensors (1a) von Heizwertschwankungen.

## Claims

1. Method for measuring a gas supply, in particular in the private, public or industrial sector, by means of a gas meter (1) which is disposed at a gas supply location (14) of a gas supply network (11), a measuring signal ($V_s$, $V_{ns}$, $M_s$, $E_s$) for a quantity consumption and/or energy consumption of the gas (3a) being determined by the gas meter (1) by means of a through-flow sensor (1a), **characterised in that**

   a) a known sensor error factor ($f_i$, $f_i'$, $fi''$, $f_i'''$) of the gas meter (1) for detecting deviations between the consumption measured by the gas meter (1) and the actual consumption, and
   b) a known consumption profile ($l_i$, $l_i'$, $L_i$) for the gas consumption, which profile is characteristic of the gas supply location (14),
   c) are defined for an accounting period as a function of a common variable (t, T) and
   d) a consumption-weighted correction factor (F) relative to the accounting period is determined by time-averaging the sensor error factor ($f_i$, $f_i'$, $f_i''$, $f_i'''$,) weighted with the consumption profile ($l_i$, $l_{i'}$, $L_i$) and the measuring signal ($V_s$, $V_{ns}$, $M_s$, $E_s$) is converted into an output value ($V_n$, M, E) with the correction factor (F).

2. Method according to Claim 1, **characterised in that**

   a) the measuring signal ($V_s$, $V_{ns}$, $M_s$, $E_s$) is an operating volume signal ($V_s$), standard volume signal ($V_{ns}$), gas mass signal ($M_s$) or energy signal ($E_s$) measured by the gas meter (1) and/or
   b) the output value ($V_n$, M, E) is a supplied standard volume ($V_n$), a supplied gas mass (M) or a supplied gas energy (E) and/or
   c) the output value ($V_n$, M, E) is calculated by multiplication of the measuring signal ($V_s$, $V_{ns}$, $M_s$, $E_s$) by the correction factor (F).

3. Method according to one of the preceding claims, **characterised in that**

   a) the averaging comprises summation and/or integration of the [sic] the common variable (t, T) of products which contain the sensor error factor ($f_i$, $f_i'$, $f_i''$, $f_i'''$) and the consumption profile ($l_i$, $l_i'$, $L_i$), and/or
   b) the averaging is implemented taking into account a heat value profile ($H_i$, $H_i'$) relative to the common variable (t, T) and/or
   c) the averaging includes a suitable standardisation function.

4. Method according to one of the preceding claims, **characterised in that**

   a) the measuring signal ($V_s$, $V_{ns}$, $M_s$, $E_s$) is added up by the gas meter (1), in non-registering operation, over a long accounting period and, subsequently, is converted outside the gas meter (1) or in the gas meter (1) with the correction factor (F) or
   b) the measuring signal ($V_s$, $V_{ns}$, $M_s$, $E_s$) is currently determined by the gas meter (1), in registering operation, in particular is added up over a short period, and is converted in the gas meter (1) or outside the gas meter (1) with a currently determined correction factor (F).

5. Method according to one of the preceding claims, **characterised in that**

   a) the sensor error factor ($f_i$, $f_i'$, $f_i''$, $f_i'''$) and in particular a heat value or heat value profile ($H_i$, $H_i'$) is determined from a gas composition (3a, 3b) in particular by means of calibration tables and
   b) in particular **in that** the gas composition (3a, 3b) is known as a function of the common variable (t, T).

6. Method according to one of the preceding claims, **characterised in that**

a) a supplied gas composition (3a) or a gas composition (33) present at the gas supply location (14) is determined by an operator (10) of the gas supply network (11), for example, from empirical values, measuring values, prognosis values or values of the gas quality derived therefrom and/or

b) the gas composition (3b) at the gas supply location (14) is calculated at least approximately from the supplied gas quality by means of simulation calculation for gas flows in the gas supply network (11).

7. Method according to one of the preceding claims, **characterised in that** the common variable (t, T) is a time variable (t), in particular a time of day, a weekday, a month or a course of a year, or a temperature (T), in particular an outside temperature profile or a temperature average value at the gas supply location (14) relative to the accounting period.

8. Method according to one of the preceding claims, **characterised in that**

a) the consumption profile ($l_i$, $l_i'$, $L_i$) is a gas quantity load profile ($l_i$) relative to a standard volume ($V_n$), a gas mass load profile ($l_i'$) relative to a gas mass (M) or a gas energy load profile ($L_i$) relative to a gas energy (E) and/or

b) the consumption profile ($l_i$, $l_i'$, $L_i$) is indicated by an approximation formula ($1(t)$, $l(T)$ ; $l'(t)$ , $l'(T)$ ; $L(t)$, $L(T)$ or by support values $l(t_i)$ , $l(T_i)$ ; $l'(t_i)$ , $l'(T_i)$ ; $L(t_i)$ , $L(T_i)$ ) .

9. Method according to one of the preceding claims, **characterised in that**

a) the consumption profile ($l_i$, $l_i'$, $L_i$) is determined globally for a section of the gas supply network (11) comprising the gas supply location (14) or locally for the gas supply location (14) and/or

b) the consumption profile ($l_i$, $l_i'$, $L_i$) is produced from empirical values, measuring values, prognosis values or values of the gas consumption at the gas supply location (14) derived therefrom.

10. Method according to one of the preceding claims, **characterised in that**

a) the output value is $V_n = V_s \cdot K$, wherein $V_n$=supplied standard volume and $V_s$=operating volume signal added up in the accounting period, $K=l/\Sigma_i(l_i \cdot f_i)$=correction factor F, $l_i=V_{ni}/V_n$=gas quantity load profile relative to standard volume, $f_i=V_{si}/V_{ni}$=sensor error factor for operating volume measuring errors, $V_{si}$=operating volume signal and $V_{ni}$=standard volume in the time interval i or

b) the output value is $V_n=V_{ns} \cdot K'$, wherein $V_n$=supplied standard volume and $V_{ns}$=standard volume signal added up in the accounting period, $K'=1/\Sigma_i(l_i \cdot f_i)$=correction factor F, $l_i=V_{ni}/V_n$=gas quantity load profile relative to standard volume, $f_i=V_{nsi}/V_{ni}$=sensor error factor f for standard volume measuring errors, $V_{nsi}$=standard volume signal and $V_{ni}$=standard volume in the time interval i or

c) the output value is $M=M_s \cdot K''$, wherein M=supplied gas mass and $M_s$=gas mass signal added up in the accounting period, $K''=l/\Sigma_i(l_i \cdot f_i'')$=correction factor, $l_i'=M_i/M$=gas quantity load profile relative to gas mass, $f_i''=M_{si}/M_i$=sensor error factor for gas mass measuring errors, $M_{si}$=gas mass signal and $M_i$=gas mass in the time interval i.

11. Method according to one of Claims 1-9, **characterised in that**

a) the output value is $E=V_s \cdot H_{gew,s}$ or $E=V_{ns} \cdot H_{gew, ns}$, wherein E=supplied gas energy, $V_s$=operating volume signal added up and $V_{ns}$=standard volume signal added up in the accounting period, the correction factor F being a weighted specific heat value per standard volume $H_{gew,s}=\Sigma_i(H_i \cdot l_i)/\Sigma_i(l_i \cdot f_i)$, $H_{gew,s}=1/\Sigma_i(L_i \cdot f_i/H_i)$, $H_{gew,ns}=\Sigma_i(H_i \cdot l_i)/\Sigma_i(l_i \cdot f_i')$ or $H_{gew,ns}=1/\Sigma i(L_i \cdot f_i'/H_i)$, where $H_i$=heat value profile per standard volume, $l_i=V_{ni}/V_n$=gas quantity load profile relative to standard volume $V_n$ or $L_i=E_i/E$=gas energy load profile relative to gas energy E, $f_i=V_{si}/V_{ni}$=sensor error factor for operating volume measuring errors or $f_i'=V_{nsi}/V_{ni}$=sensor error factor for standard volume measuring errors, $V_{si}$=operating volume signal, $V_{nsi}$=standard volume signal, $V_{ni}$=standard volume and $E_i$=gas energy in the time interval i or

b) the output value is $E=M_s \cdot H_{gew,M}$, wherein E=supplied gas energy and $M_s$=gas mass signal added up in the accounting period, the correction factor F being a weighted specific heat value per mass $H_{gew,M}=\Sigma i(H_i \cdot l_i')/\Sigma i(l_i' \cdot f_i'')$ or $H_{gew,M}=1/\Sigma_i/(L_i \cdot f_i''/H_i')$, where $H_i'$=heat value profile per mass, $l_i'=M_i/M$=gas mass load profile relative to gas mass M, $f_i''=M_{si}/M_i$=sensor error factor for gas mass measuring errors, $M_{si}$=gas mass signal and $M_i$=gas mass in the time interval i.

**12.** Method according to one of Claims 1-9, **characterised in that** the output value is $E=E_s \cdot h_{gew}$, wherein E=supplied gas energy and $E_s$=gas energy signal added up in the accounting period, the correction factor F being a weighted heat value correction factor $h_{gew}=\Sigma_i(H_i \cdot l_i)/\Sigma_i(H_i \cdot l_i \cdot f_i''')$ or $hgew=1/\Sigma_i(L_i \cdot f_i''')$ where $H_i$=heat value profile per standard volume, $l_i=V_{ni}/V_n$=gas quantity load profile relative to standard volume $V_n$ or $L_i=E_i/E$=gas energy load profile relative to gas energy E, $f_i'''=E_{si}/E_i$=sensor error factor for gas energy measuring errors, $E_{si}$=gas energy signal and $E_i$=gas energy in the time interval i.

**13.** Method according to Claim 12, **characterised in that**

   a) the through-flow sensor (1a) is a thermal through-flow sensor (1a), with which a sensor signal ($S_{kal}$) calibrated to a through-flow rate is determined and
   b) the calibrated sensor signal is calibrated into the gas energy signal $E_s$ using a basic heat value factor ($H_{CH}$) for a basic gas mixture (CH) in order to calibrate the gas meter (1) as an energy measuring device.

**14.** Method according to Claim 13, **characterised in that** for the calibration of the gas meter (1) as an energy measuring device

   a) calibration gas sensor signals ($S_{N2}$) [lacuna] the through-flow rate of a calibration gas are determined and stored as a sensor calibration curve ($F(S_{N2})$) in the gas meter (1) and
   b) by multiplication of the sensor calibration curve ($F(S_{N2})$) by a signal conversion factor ($f_{N2-CH}$), the calibrated sensor signal ($S_{kal}$) is obtained and from this the gas energy signal E is determined by multiplication by the basic heat value factor ($H_{CH}$).

**15.** Method according to one of Claims 13-14,
**characterised in that**

   a) from the calibrated sensor signals ($S_{kal}$) of the through-flow sensor (1a), heat value variations up to a fraction are inherently detected and
   b) deviations between the inherently detected and the actual heat value variations of the gas composition (3a) at the gas supply location (14) are detected using the sensor error factor fi''' for gas energy measuring errors and are corrected during the conversion of the gas energy signal $E_s$ into the gas energy E.

**16.** Gas meter (1) for measuring a gas supply, in particular in the private, public or industrial sector, the gas meter (1) having a through-flow sensor (1a) and a measuring and evaluating unit (7) for determining a measuring signal ($V_s$, $V_{ns}$, $M_s$, $E_s$) for a quantity and/or energy consumption of the gas (3a), **characterised in that**

   a) computing means (7a) configured to determine and/or store a sensor error factor ($f_i$, $f_i'$, $f_i''$, $f_i'''$) of the gas meter (1) and a consumption profile ($l_i$, $l_i'$, $L_i$) which is characteristic of the gas supply location (14) and also to calculate a correction factor F by weighted time-averaging of the sensor error factor ($f_i$, $f_i'$, $f_i''$, $f_i'''$) with the consumption profile ($l_i$, $l_i'$, $L_i$) are present
   b) computing means (7b) configured to convert the measuring signal ($V_s$, $V_{ns}$, $M_s$, $E_s$) by means of the correction factor F into an output value ($V_n$, M, E) of the gas meter (1) are present.

**17.** Gas meter (1) according to Claim 16, **characterised in that**

   a) a data memory (7d) for storing the sensor error factor ($f_i$, $f_i'$, $f_i''$, $f_i'''$) and the consumption profile ($l_i$, $l_i'$, $L_i$) as a function of a common time variable and/or temperature variable (T) is present and/or
   b) the computing means (7a, 7b, 7c) and/or a data memory (7d) are disposed outside the gas meter (1) or in the gas meter (1).

**18.** Gas meter (1) according to one of Claims 16-17,
**characterised in that**

   a) the flow sensor (1a) includes a thermal through-flow sensor (1a), in particular a CMOS anemometer (1a), with a heating wire (6) and temperature sensors (5a, 5b) disposed upstream and downstream and/or
   b) the measuring and evaluating unit (7) includes means for calibrating the gas supply in energy units (kW/h).

**19.** Gas meter (1) according to one of Claims 16-18,

**characterised in that**

a) the measuring and evaluating unit (7) includes computing means (7c) for determining a calibrated sensor signal ($S_{kal}$) by means of re-evaluation of a calibration gas to a basic gas mixture (CH) and for determining a gas energy signal $E_s$ by means of multiplication of the calibrated sensor signal ($S_{kal}$) by a basic heat value factor ($H_{CH}$) and

b) in particular **in that** computing means (7a) for determining and/or storing a sensor error factor $f_i'''$ for gas energy measurement are present for detection and correction of an inherent dependency of the calibrated sensor signal ($S_{kal}$) of the through-flow sensor (1a) upon heat value variations.

**Revendications**

1. Procédé pour mesurer une fourniture de gaz, en particulier dans le secteur privé, public ou industriel, au moyen d'un compteur de gaz (1) qui est disposé en un lieu de fourniture de gaz (14) d'un réseau de distribution de gaz (11), dans lequel un signal de mesure ($V_s$, $V_{ns}$, $M_s$, $E_s$) de quantité consommée et/ou consommation d'énergie du gaz (3a) est déterminé par le compteur de gaz (1) à l'aide d'un capteur de débit (1a), **caractérisé en ce que** sont définis

    a) un facteur de défaut de capteur ($f_i$, $f_i'$, $f_i''$, $f_i'''$) connu du compteur de gaz (1) pour relever les écarts entre la consommation mesurée par le compteur de gaz (1) et la consommation effective, et

    b) un profil de consommation ($l_i$, $l_i'$, $L_i$) caractéristique de la consommation de gaz, connu pour le lieu de fourniture de gaz (14)

    c) en tant que fonction d'une variable (t, T) commune pour une période de facturation et

    d) il est déterminé un facteur de correction (F) pondéré en consommation, rapporté à la période de facturation, pondéré par une moyenne temporelle du facteur de défaut de capteur ($f_i$, $f_i'$, $f_i''$, $f_i'''$), avec le profil de consommation ($l_i$, $l_i'$, $L_i$), et le signal de mesure ($V_s$, $V_{ns}$, $M_s$, $E_s$) est converti avec le facteur de correction (F) en une valeur de sortie ($V_n$, M, E).

2. Procédé selon la revendication 1, **caractérisé en ce que**

    a) le signal de mesure ($V_s$, $V_{ns}$, $M_s$, $E_s$) est un signal de volume de service ($V_s$) mesuré par le compteur de gaz (1), un signal de volume normal ($V_{ns}$), un signal de masse de gaz ($M_s$) ou un signal d'énergie ($E_s$) et/ou

    b) la valeur de sortie ($V_n$, M, E) est un volume normal ($V_n$) pondéré, une masse de gaz (M) pondérée ou une énergie de gaz (E) pondérée, et/ou

    c) la valeur de sortie ($V_n$, M, E) est calculée par multiplication du signal de mesure ($V_s$, $V_{ns}$, $M_s$, $E_s$) par le facteur de correction (F).

3. Procédé selon l'une quelconque des revendications 1 ou 2, **caractérisé en ce que**

    a) le calcul de la moyenne est une addition et/ou intégration qui comprend la variable commune (t, T) de produits qui contiennent le facteur de défaut de capteur ($f_i$, $f_i'$, $f_i''$, $f_i'''$) et le profil de consommation ($l_i$, $i_i'$, $L_i$), et/ou

    b) le calcul de la moyenne est exécuté en tenant compte d'un profil de valeur de valeur calorifique ($H_i$, $H_i'$) rapporté à la variable commune (t, T) et/ou

    c) le calcul de la moyenne comprend une fonction de normalisation appropriée.

4. Procédé selon l'une quelconque des revendications 1 à 3, **caractérisé en ce que**

    a) le signal de mesure ($V_s$, $V_{ns}$, $M_s$, $E_s$) est additionné par le compteur de gaz (1) en service de non-enregistrement pendant une longue période de facturation, et est recalculé ultérieurement, à l'extérieur du compteur de gaz (1) ou dans le compteur de gaz (1), avec le facteur de correction (F), ou

    b) le signal de mesure ($V_s$, $V_{ns}$, $M_s$, $E_s$) est déterminé de manière actuelle par le compteur de gaz (1) en fonctionnement avec enregistrement, en particulier additionné sur une courte période, et est recalculé dans le compteur de gaz (1) ou à l'extérieur du compteur de gaz (1) avec un facteur de correction (F) déterminé de manière actuelle.

5. Procédé selon l'une quelconque des revendications 1 à 4, **caractérisé en ce que**

a) à partir d'une composition de gaz (3a, 3b), le facteur de défaut de capteur ($f_i$, $f_i'$, $f_i''$, $f_i'''$) et en particulier une valeur calorifique ou profil de valeur calorifique ($H_i$, $H_i'$) est déterminé en particulier au moyen de tableaux d'étalonnage, et
b) en particulier **en ce que** la composition du gaz (3a, 3b) est connue en tant que fonction de la variable commune (t, T).

6. Procédé selon l'une quelconque des revendications 1 à 5, **caractérisé en ce qu'**

a) une composition de gaz introduite (3a) ou une composition de gaz (33) existant au lieu de fourniture de gaz (14) est déterminée par un exploitant (10) du réseau de distribution de gaz (11), par exemple à partir de valeurs expérimentales, de valeurs mesurées, de valeurs de pronostic de la qualité du gaz ou de valeurs dérivées de celles-ci, et/ou
b) la composition de gaz (3b) au lieu de fourniture de gaz (14) est calculée au moins approximativement à partir de la qualité de gaz introduite, au moyen d'un calcul de simulation pour des courants de gaz dans le réseau de distribution de gaz (1).

7. Procédé selon l'une quelconque des revendications 1 à 6, **caractérisé en ce que** la variable commune (t, T) est une variable de temps (t), en particulier une heure de la journée, un jour de la semaine, un mois ou une période annuelle, ou une température (T), en particulier un profil de température extérieure ou une valeur moyenne de température au lieu de fourniture de gaz (14) rapportée à la période de facturation.

8. Procédé selon l'une quelconque des revendications 1 à 7, **caractérisé en ce que**

a) le profil de consommation ($l_i$, $l_i'$, $L_i$) est un profil de charge de quantité de gaz ($l_i$) rapporté à un volume normal ($V_n$), un profil de charge de masse de gaz ($l_i'$) rapporté à une masse de gaz (M) ou un profil de charge d'énergie de gaz ($L_i$) rapporté à une énergie de gaz (E), et/ou
b) le profil de consommation ($l_i$, $l_i'$, $L_i$) est indiqué par une formule d'approximation (1(t), 1(T) ; 1'(t), l'(T) ; L (t) , L (T) ou par des valeurs d'appui ($l(t_i$, $l(T_i)$ $l'(t_i)$, $l'(T_i)$; $L(t_i)$, $L(T_i)$).

9. Procédé selon l'une quelconque des revendications 1 à 8, **caractérisé en ce que**

a) le profil de consommation ($l_i$, $l_i'$, $L_i$) est déterminé globalement pour un tronçon du réseau de distribution de gaz (11), comprenant le lieu de fourniture de gaz (14), ou localement pour le lieu de fourniture de gaz (14), et/ou
b) le profil de consommation ($l_i$, $l_i'$, $L_i$) est établi à partir de valeurs expérimentales, de valeurs mesurées, de valeurs de pronostic ou de valeurs dérivées de celles-ci de la consommation de gaz au lieu de fourniture de gaz (14).

10. Procédé selon l'une quelconque des revendications 1 à 9, **caractérisé en ce que**

a) la valeur de sortie est $V_n = V_s \cdot K$, $V_n$ étant rapporté au volume normal et $V_s$ = signal de volume de service additionné pendant la période de facturation, $K=1/\Sigma_i(l_i \cdot f_i)$ = facteur de correction F, $l_i=V_{ni}/V_n$=profil de charge de quantité de gaz rapporté au volume normal, $f_i=V_{si}/V_{ni}$=facteur de défaut de capteur pour défaut de mesure de volume de service, $V_{si}$=signal de volume de service et $V_{ni}$=volume normal pendant l'intervalle de temps i ou
b) la valeur de sortie est $V_n=V_{ns} \cdot K'$, $V_n$ étant rapporté au volume normal et $V_{ns}$=signal de volume normal additionné pendant la période de facturation, $K'=1/\Sigma_i(l_i \cdot f_i')$=facteur de correction F, $l_i=V_{ni}/V_n$=profll de charge de quantité de gaz rapporté au volume normal, $f_i'=V_{nsi}/U_{ni}$=facteur de défaut de capteur f pour défaut de mesure de volume normal, $V_{nsi}$=signal de volume normal et $V_{ni}$=volume normal pendant l'intervalle de temps i ou
c) la valeur de sortie est $M=M_s \cdot K''$, M étant la masse de gaz pondérée et $M_s$=signal de masse de gaz additionné pendant la période de facturation, $K''=1/\Sigma_i(li \cdot fi'')$ =facteur de correction, $l_i'=M_i/M$=profil de charge de quantité de gaz rapporté à la masse de gaz, $f_i''=M_{si}/M_i$=facteur de défaut de capteur pour défaut de mesure de masse de gaz, $M_{si}$=signal de masse de gaz et $M_i$=masse de gaz pendant l'intervalle de temps i.

11. Procédé selon l'une quelconque des revendications 1 à 9, **caractérisé en ce que**

a) la valeur de sortie est $E=V_s \cdot H_{gew,s}$ ou $E=V_{ns} \cdot Hg_{ew,ns}$, E est l'énergie de gaz pondérée, $V_s$=signal de volume de service additionné et $V_{ns}$=signal de volume normal additionné pendant la période de facturation, le facteur de correction F étant une valeur calorifique spécifique pondéré par volume normal

$$H_{gew,s} = \sum_i (H_i \bullet l_i) / \sum_i (l_i \bullet f_i) , \quad H_{gew,s} = 1/\sum_i (L_i \bullet f_i / H_i) ,$$

$$H_{gew,ns} = \sum_i (H_i \bullet l_i) / \sum_i (l_i \bullet f_i')$$

ou

$H_{gew,ns}$ = $1/\Sigma_i(L_i \bullet f_i'/H_i)$ avec $H_i$ = profil de valeur calorifique par volume normal, $l_i = V_{ni}/V_n$ = profil de charge de quantité de gaz rapporté au volume normal $V_n$ ou $L_i = E_i/E$ = profil de charge d'énergie de gaz rapporté à l'énergie de gaz E, $f_i' = V_{si}/V_{ni}$ = facteur de défaut de capteur pour défaut de mesure de volume de service ou $f_i' = V_{nsi}/V_{ni}$ = facteur de défaut de capteur pour défaut de mesure de volume normal, $V_{si}$ = signal de volume de service, $V_{nsi}$ = signal de volume normal, $V_{ni}$ = volume normal et $E_i$ = énergie de gaz pendant l'intervalle de temps i, ou

b) la valeur de sortie est $E = M_s \bullet H_{gew,M}$, E étant rapporté à l'énergie de gaz et $M_s$ = le signal de masse de gaz additionné pendant la période de facturation, le facteur de correction F étant une valeur calorifique spécifique pondéré par masse

$H_{gew,M}$ = $\Sigma_i(H_i' \bullet l_i')/\Sigma_i(l_i' \bullet f_i'')$ ou

$H_{gew,M} = 1/\Sigma_i(L_i \bullet f_i''/H_i')$ avec $H_i'$ = profil de valeur calorifique par masse, $l_i' = M_i/M$ = profil de charge de masse de gaz rapporté à la masse de gaz M, $f_i'' = M_{si}/M_i$ = facteur de défaut de capteur pour défaut de mesure de masse de gaz, $M_{si}$ = signal de masse de gaz et $M_i$ = masse de gaz pendant l'intervalle de temps i.

12. Procédé selon l'une quelconque des revendications 1 à 9, **caractérisé en ce que** la valeur de sortie est $E = E_s \bullet h_{gew}$, E étant rapporté à l'énergie de gaz et $E_s$ = signal d'énergie de gaz additionné pendant la période de facturation, le facteur de correction F étant un facteur de correction de valeur calorifique pondéré $H_{gew} = \Sigma_i(H_i \bullet l_i)/\Sigma_i(H_i \bullet l_i \bullet f_i'')$ ou $h_{gew}$ = $1/\Sigma_i(L_i \bullet f_i'')$ avec $H_i$ = profil de valeur calorifique par volume normal, $l_i = V_{ni}/V_n$ = profil de charge de quantité de gaz rapporté au volume normal $V_n$ ou $L_i = E_i/E$ = profil de charge d'énergie de gaz rapporté à l'énergie de gaz E, $f_i''' = E_{si}/E_i$ = facteur de défaut de capteur pour défaut de mesure d'énergie de gaz, $E_{si}$ = signal d'énergie de gaz et $E_i$ = énergie de gaz pendant l'intervalle de temps i.

13. Procédé selon la revendication 12, **caractérisé en ce que**

a) le capteur de débit (1a) est un capteur de débit thermique (1a) avec lequel est déterminé un signal de capteur ($S_{kal}$) étalonné sur un débit et

b) pour l'étalonnage du compteur de gaz (1) en tant qu'appareil de mesure d'énergie, le signal de capteur ($S_{kal}$) étalonné est étalonné en utilisant un facteur de valeur calorifique de base ($H_{CH}$) pour un mélange de gaz de base (CH) dans le signal d'énergie de gaz $E_s$.

14. Procédé selon la revendication 13, **caractérisé en ce que** pour l'étalonnage du compteur de gaz (1) en tant qu'appareil de mesure d'énergie

a) à partir de signaux de capteur de gaz d'étalonnage ($S_{N2}$) on détermine le débit d'un gaz d'étalonnage mémorisé sous la forme d'une courbe d'étalonnage de capteur ($F(S_{N2})$) dans le compteur de gaz (1), et

b) par multiplication de la courbe d'étalonnage de capteur ($F(S_{N2})$) par un facteur de conversion de signal ($f_{N2\text{-}CH}$) on obtient le signal de capteur étalonné ($S_{kal}$) et à partir de celui-ci, par multiplication par le facteur de valeur calorifique de base ($H_{CH}$), on détermine le signal d'énergie de gaz E.

15. Procédé selon l'une quelconque des revendications 13 à 14, **caractérisé en ce que**

a) à partir des signaux de capteur étalonnés ($S_{kal}$) du capteur de débit (1a) des fluctuations de la valeur calorifique sont relevées de manière inhérente, en une fraction et

b) des écarts entre les fluctuations de la valeur calorifique relevées de manière inhérente et les fluctuations effectives de la composition de gaz (3a) au lieu de fourniture de gaz (14) sont relevés à l'aide du facteur de défaut de capteur ($f_i'''$) pour des défauts de mesure d'énergie de gaz, et sont corrigés lors de la conversion du signal d'énergie de gaz $E_s$ en énergie de gaz E.

16. Compteur de gaz (1) pour mesurer une fourniture de gaz, en particulier dans le secteur privé, public ou industriel, dans lequel le compteur de gaz (1) comporte un capteur de débit (1a) et une unité de mesure et d'interprétation (7) pour déterminer un signal de mesure ($V_s$, $V_{ns}$, $M_s$, $E_s$) pour une consommation en quantité et/ou énergie du gaz (3a), **caractérisé en ce que**

a) des moyens de calcul (7a) sont installés pour déterminer et/ou mémoriser un facteur de défaut de capteur ($f_i$, $f_i'$, $f_i''$, $f_i'''$) du compteur de gaz (1) et un profil de consommation ($l_i$, $l_i'$, $Li$) caractéristique du lieu de fourniture de gaz (14), ainsi que pour calculer un facteur de correction (F) par moyenne temporelle pondérée du facteur de défaut de capteur ($f_i$, $f_i'$, $f_i''$, $f_i'''$) avec le profil de consommation ($l_i$, $l_i'$, $L_i$) , et
b) des moyens de calcul (7b) sont installés pour convertir le signal de mesure ($V_s$, $V_{ns}$, $M_s$, $E_s$) au moyen du facteur de correction F en une valeur de sortie ($V_n$, M, E) du compteur de gaz (1).

**17.** Compteur de gaz (1) selon la revendication 16,
**caractérisé en ce que**

a) il est prévu une mémoire de données (7d) pour mémoriser le facteur de défaut de capteur ($f_i$, $f_i'$, $f_i''$, $f_i'''$) et le profil de consommation ($l_i$, $l_i'$, $L_i$) en tant que fonction d'une variable de temps commune et/ou variable de température (T), et/ou
b) les moyens de calcul (7a, 7b, 7c) et/ou une mémoire de données (7d) sont disposés à l'extérieur du compteur de gaz (1) ou dans le compteur de gaz (1).

**18.** Compteur de gaz (1) selon l'une quelconque des revendications 16 à 17, **caractérisé en ce que**

a) le capteur de débit (1a) est un capteur de débit thermique (1a), en particulier un anémomètre CMOS (1a), avec un fil chauffant (6) et des sondes de température (5a, 5b) disposées en amont et en aval, et/ou
b) l'unité de mesure et d'interprétation (7) comporte des moyens pour l'étalonnage de la fourniture de gaz en unités d'énergie (kW/h).

**19.** Compteur de gaz (1) selon l'une quelconque des revendications 16 à 18, **caractérisé en ce que**

a) l'unité de mesure et d'interprétation (7) comporte des moyens de calcul (7c) pour déterminer un signal de capteur étalonné ($S_{kal}$) par conversion d'un gaz d'étalonnage à un mélange de gaz de base (CH) et pour déterminer un signal d'énergie de gaz $E_s$ par multiplication du signal de capteur étalonné ($S_{kal}$) par un facteur de valeur calorifique de base ($H_{CH}$), et
b) en particulier **en ce que** sont prévus des moyens de calcul (7a) pour déterminer et/ou mémoriser un facteur de défaut de capteur $f_i'''$ pour la mesure de l'énergie de gaz, pour relever et corriger une dépendance inhérente du signal de capteur étalonné ($S_{kal}$) du capteur de débit (1a) à l'égard de fluctuations de la valeur calorifique.

EP 1 585 946 B1

V  4  1b  3b

2 →

1a

1

5a  8  5b

$H_{CH}$

S

7c  $S_{kal}$  7b  $V_m$, M, E

$V_s$, $V_{ns}$,
$M_s$, $E_s$

7

8

kWh

7a, 7d

$f_i$, $f_i'$, $f_i''$, $f_i'''$;
$I_i$, $I_i'$, $L_{ii}$;
t, T; F

9

10

Fig. 1

**12 15 11 1 14 15 13 12**

3a

3b 12

**Fig. 2**

10

$I_j$, $I(t)$, $I(T)$; $I'_j$, $I'(t)$, $I'(T)$; $L_j$, $L(t)$, $L(T)$ [kWh/d]

-20 -15 -10 -5 0 5 10 15 20

Temperatur T ( °C ) oder Zeit t [ h ]    **Fig. 3**

$S_{kal}$    $H_i$

1,5
1
0,5
0
-0,5
-1
-1,5
-2

Delta ( % )

1 2 3 4 5 6 7 8 9 10 11 12

Monat    —    **Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0196819 A1
- EP 1227305 A

- EP 0373965 A
- US 5311447 A
- WO 0118500 A

**In der Beschreibung aufgeführte Nicht-Patentliteratur**

- **D. HOBURG ; P. ULBIG.** Gesetzliches Messwesen und Brennwertrekonstruktionssysteme. *Gas · Erdgas,* 2002, vol. 143 (1